# EUROPEAN PATENT APPLICATION

(11) **EP 4 660 929 A1**
(43) Date of publication of application: **10.12.2025**
(21) Application number: 23937544.7
(22) Date of filing: 18.05.2023
(51) Int. Cl.: G06Q 50/10

(54) **CONSENSUS BUILDING ASSISTANCE DEVICE, CONSENSUS BUILDING ASSISTANCE METHOD, AND CONSENSUS BUILDING ASSISTANCE PROGRAM**

(71) Applicant: Hitachi, Ltd., Tokyo 100-8280 (JP)
(72) Inventor: KATO Takeshi, Tokyo 100-8280 (JP); ASA Yasuhiro, Tokyo 100-8280 (JP)
(74) Representative: MERH-IP Matias Erny Reichl Hoffmann Patentanwälte PartG mbB
(86) International application number: PCT/JP2023/018606
(87) International publication number: WO 2024/236808

(57) **Abstract**

A consensus building support device includes a processor that executes a program and a storage device that stores the program, and the consensus building support device executes an acquisition process of acquiring human relation information indicating human relations between a plurality of participants and difference degree information indicating a difference degree between opinions of the plurality of participants, and a first generation process of generating, based on the human relation information and the difference degree information which are acquired in the acquisition process, a network graph including nodes indicating the participants, an edge indicating that there is a human relation between two participants among the plurality of participants, and an edge weight indicating the difference degree.

## Description

### Technical Field

The present invention relates to a consensus building support device, a consensus building support method, and a consensus building support program that support consensus building.

### Background Art

In order to solve various social problems in countries, local governments, communities, and the like, it is important to form a consensus while respecting various opinions of residents. The majority decision by voting or the decision made by a specific instructor may enforce the minority or the instructed person to agree with the decision, which may cause a new social problem. In order to aim at a equality-oriented democracy, it is necessary to perform consensus building of a 11 participants so that the persons do not feel an objection to the extent that the participants want to refuse consent.

In consensus building, fairness in a process and a result, efficiency regarding time and cost, rationality based on scientific grounds and future prediction, and stability regarding a consensus content and a relationship between the interested parties are required.

PTL 1 below discloses a system that supports consensus building of participants. In this system, opinions of participants are associated with each other based on a link of a key phrase set in advance, and the opinions are developed into a hierarchical network. The system totals the number of selections of a key phrase and a link preferred by participants to present a preference tendency of all participants as an overall opinion network.

PTL 2 below discloses a system that presents options to participants. In this system, similarity of preferences of participants to a plurality of options is calculated. Options are recommended to the participants based on information of a preference similarity network between the participants or the mathematical matrix thereof.

### Citation List

### Patent Literature

PTL 1: JP2004-13256A
PTL 2: JP2011-53920A
PTL 3: WO2020/032125

### Non Patent Literature

NPL 1: Yasuhiro Asa, Takeshi Kato and Ryuji Mine, "Composite Consensus-Building Process: Permissible Meeting Analysis and Compromise Choice Exploration," arXiv:2211.08593, 16 Nov. 2022.

### Summary of Invention

### Technical Problem

In PTL 1, although the overall opinion network of participants can be overlooked, since the overall opinion network is based on the aggregation of the participants, the overall opinion network is classified into a consensus of majority decision. Therefore, consideration for minority and consideration for fairness and rationality are not made. In addition, the overall opinion network contributes to discussions of participants, but a process leading to a final consensus is not disclosed.

In PTL 2, it is possible to obtain similarity from a preference similarity network of participants and present options preferred by the participants, but it is not considered how to reach a consensus from the options, for example, which participant should be prompted to reach a consensus. In addition, the relation between the minority and the majority is not considered.

An object of the present invention is to support fair consensus building in consideration of minority.

### Solution to Problem

A consensus building support device according to one aspect of the invention disclosed in the present application includes a processor configured to execute a program and a storage device configured to store the program, in which the processor is configured to execute an acquisition process of acquiring human relation information indicating human relations between a plurality of participants and difference degree information indicating a difference degree between opinions of the plurality of participants, and a first generation process of generating, based on the human relation information and the difference degree information which are acquired in the acquisition process, a network graph including nodes indicating the participants, an edge indicating that there is a human relation between two participants among the plurality of participants, and an edge weight indicating the difference degree.

### Advantageous Effects of Invention

According to a typical embodiment of the present invention, it is possible to support fair consensus building while taking into consideration the minority. Problems, configurations, and effects other than those described above will become apparent in the following description of embodiments. Notations of "first", "second", "third", and the like in the present specification are used to identify the components, and the numbers and the order are not necessarily limited.

### Brief Description of Drawings

[FIG. 1] FIG. 1 is a block diagram illustrating a configuration example of a consensus building support system for supporting consensus building according to Embodiment 1.
[FIG. 2] FIG. 2 is a flowchart illustrating a consensus building support processing procedure example executed by the consensus building support device.
[FIG. 3] FIG. 3 is a flowchart illustrating an internal processing procedure example of a content output process in step S209 in FIG. 2.
[FIG. 4] FIG. 4 is a diagram illustrating a data output example in the consensus building support device.
[FIG. 5] FIG. 5 is a diagram illustrating a data output example in a personal device.
[FIG. 6] FIG. 6 is a diagram illustrating an example of a human relation information table.
[FIG. 7] FIG. 7 is a diagram illustrating an example of first human relation matrix data.
[FIG. 8] FIG. 8 is a diagram illustrating an example of second human relation matrix data.
[FIG. 9] FIG. 9 is a diagram illustrating an example of an opinion network.
[FIG. 10] FIG. 10 is a diagram illustrating an example of human relation information.
[FIG. 11] FIG. 11 is a diagram illustrating an example of opinion information.
[FIG. 12] FIG. 12 is a diagram illustrating an example of difference degree information.
[FIG. 13] FIG. 13 is a diagram illustrating an example of a first network graph of participants.
[FIG. 14] FIG. 14 is a diagram illustrating an example of a second network graph.
[FIG. 15] FIG. 15 is a diagram illustrating Example 1 of a third network graph.
[FIG. 16] FIG. 16 is a diagram illustrating Example 2 of the third network graph.
[FIG. 17] FIG. 17 is a diagram illustrating Example 3 of the third network graph.
[FIG. 18] FIG. 18 is a diagram illustrating Example 4 of the third network graph.
[FIG. 19] FIG. 19 is a diagram illustrating an update example of opinion information.
[FIG. 20] FIG. 20 is a diagram illustrating an update example of difference degree information.
[FIG. 21] FIG. 21 is a diagram illustrating Example 1 of a second network graph according to Embodiment 2.
[FIG. 22] FIG. 22 is a diagram illustrating Example 2 of the second network graph according to Embodiment 2.
[FIG. 23] FIG. 23 is a diagram illustrating Example 3 of the second network graph according to Embodiment 2.
[FIG. 24] FIG. 24 is a diagram illustrating Example 4 of the second network graph according to Embodiment 2.
[FIG. 25] FIG. 25 is a diagram illustrating Example 5 of the second network graph according to Embodiment 2.
[FIG. 26] FIG. 26 is a diagram illustrating an update example of human relation information according to Embodiment 3.
[FIG. 27] FIG. 27 is a diagram illustrating an update example of difference degree information according to Embodiment 3.
[FIG. 28] FIG. 28 is a diagram illustrating Example 1 of a second network graph according to Embodiment 3.
[FIG. 29] FIG. 29 is a diagram illustrating Example 2 of the second network graph according to Embodiment 3.
[FIG. 30] FIG. 30 is a diagram illustrating Example 3 of the second network graph according to Embodiment 3.
[FIG. 31] FIG. 31 is a diagram illustrating Example 4 of the second network graph according to Embodiment 3.
[FIG. 32] FIG. 32 is a diagram illustrating Example 5 of the second network graph according to Embodiment 3.
[FIG. 33] FIG. 33 is a diagram illustrating an example of opinion information according to Embodiment 4.
[FIG. 34] FIG. 34 is a diagram illustrating an example of difference degree information according to Embodiment 4.
[FIG. 35] FIG. 35 is a diagram illustrating Example 1 of a second network graph according to Embodiment 4.
[FIG. 36] FIG. 36 is a diagram illustrating Embodiment 1 of a third network graph according to Embodiment 4.
[FIG. 37] FIG. 37 is a diagram illustrating Example 2 of the third network graph according to Embodiment 4.
[FIG. 38] FIG. 38 is a diagram illustrating Example 3 of the third network graph according to Embodiment 4.
[FIG. 39] FIG. 39 is a diagram illustrating Example 1 of a third network graph according to Embodiment 5.
[FIG. 40] FIG. 40 is a diagram illustrating an example of human relation information according to Embodiment 5.
[FIG. 41] FIG. 41 is a diagram illustrating Example 2 of the third network graph according to Embodiment 5.
[FIG. 42] FIG. 42 is a diagram illustrating Example 3 of the third network graph according to Embodiment 5.
[FIG. 43] FIG. 43 is a diagram illustrating Example 4 of the third network graph according to Embodiment 5.
[FIG. 44] FIG. 44 is a diagram illustrating Example 5 of the third network graph according to Embodiment 5.
[FIG. 45] FIG. 45 is a diagram illustrating an example of a network graph according to Embodiment 6.
[FIG. 46] FIG. 46 is a table illustrating an example of calculation results of graph features according to Embodiment 1 to Embodiment 6.

### Description of Embodiments

### [Embodiment 1]

### <Consensus Building Support System>

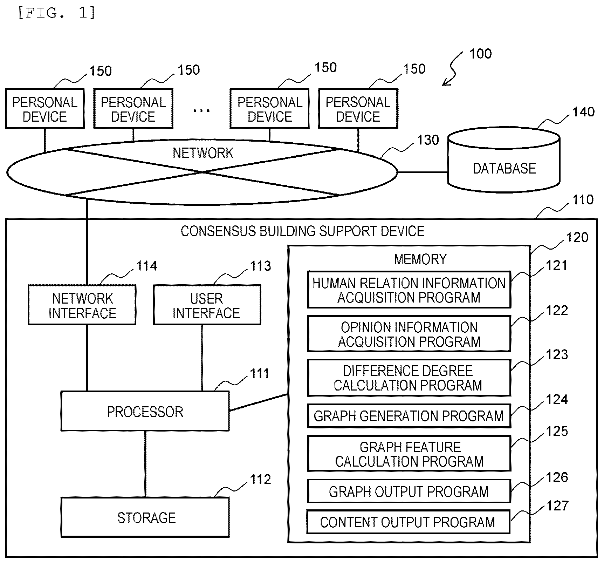

FIG. 1 is a block diagram illustrating a configuration example of a consensus building support system for supporting consensus building according to Embodiment 1. A consensus building support system 100 includes a consensus building support device 110, a database 140, and personal devices 150 carried by participants such as a personal computer, a tablet terminal, or a smartphone. These are connected to each other via a network 130.

The consensus building support device 110 includes a processor 111, a memory 120, a storage 112, a user interface 113, and a network interface 114. The consensus building support device 110 is connected to the network 130 via the network interface 114 and communicates with the personal devices 150 and the database 140.

The processor 111 executes a calculation process in the consensus building support device 110. The storage device 112 is a non-transitory or transitory recording medium that stores various programs or data. Examples of the storage 112 include a read only memory (ROM), a random access memory (RAM), a solid state drive (SSD), and a hard disk drive (HDD).

The storage 112 stores a human relation information acquisition program 121, an opinion information acquisition program 122, an opinion difference degree calculation program 123, a graph generation program 124, a graph feature calculation program 125, a graph output program 126, and a content output program 127.

Further, the storage 112 stores human relation information and opinion information. The human relation information is acquired by the human relation information acquisition program 121 from the personal devices 150 via the network 130. The opinion information is acquired by the opinion information acquisition program 122.

The user interface 113 includes, for example, at least one of a display, a keyboard, a mouse, a touch panel, a speaker, a microphone, a camera, and a sensor.

The network interface 114 is connected to the network 130 including the Internet and a communication line, and transmits and receives data such as human relation information, opinion information, and content to and from the personal devices 150.

Each of the personal devices 150 is a personal computer, a tablet terminal, a smartphone, or another smart device.

The consensus building support device 110 causes the processor 111 to execute the human relation information acquisition program 121, the opinion information acquisition program 122, the opinion difference degree calculation program 123, the graph generation program 124, the graph feature calculation program 125, the graph output program 126, and the content output program 127 stored in the storage 112.

The human relation information acquisition program 121 is a program that causes the processor 111 to execute a process of acquiring human relation information of participants from the personal devices 150 and storing the human relation information in the storage 112 or the database 140. The human relation information is information regarding the presence or absence of a connection between a participant and another participant, and includes a call history between participants via the personal devices 150, a chat history, report information of the participant, relation information based on a preliminary investigation, and the like.

The opinion information acquisition program 122 is a program that causes the processor 111 to execute a process of acquiring opinion information of participants from the personal devices 150 and storing the opinion information in the storage 112 or the database 140. The opinion information is information indicating opinions of a participants, and is, for example, a degree of approval or disapproval or a preference order of each of the participants for a plurality of options.

The difference degree calculation program 123 is a program that causes the processor 111 to execute a process of calculating a difference degree between opinions between participants based on opinion information. The difference degree between opinions is a difference in opinions between a participant and another participant, and is calculated based on the opinion information.

For example, when the opinion information is the degree of approval or disapproval with respect to a plurality of options, the consensus building support device 110 sums the difference degrees in opinions in the degree of approval or disapproval for each option of the participants.

In the case of the preference order of a plurality of options, the consensus building support device 110 calculates a difference degree between opinions based on a width of an allowable range in the preference order of the participants, that is, a range in the preference order to which the participants are allowed to reach a consensus. In addition, the consensus building support device 110 calculates a difference degree between opinions based on the number of replacements until the opinion matches an opinion of the other party by replacing the preference order of the options by the compromise option search of NPL 1.

The graph generation program 124 is a program that causes the processor 111 to execute a process of generating a first network graph to a third network graph. Specifically, first, the consensus building support device 110 generates the first network graph based on the human relation information. The first network graph is a network graph in which participants are set as nodes and human relations are set as edges connecting the nodes, but since the difference degree between opinions is not considered, edge weights are all equal.

Next, the consensus building support device 110 generates a second network graph by weighting the edges of the first network graph based on the difference degree between opinions. In the second network graph, since the difference degree between opinions is used as an edge weight, an edge distance increases when the difference degree between opinions of participants is large.

The consensus building support device 110 generates a third network graph based on the graph features of either the first network graph or the second network graph. The graph features are calculated by the graph feature calculation program 125.

The graph feature calculation program 125 is a program that causes the processor 111 to execute a process of calculating the graph features of the first network graph or the second network graph.

The graph features are a modularity, a closeness centrality, a node betweenness centrality, an edge betweenness centrality, a mean distance, a graph density, link efficiency, a clustering coefficient, and graph assortativity, which are known in network analysis.

The modularity is an index for improving the quality of cluster division (community detection) of a network. Specifically, for example, for each of the divided clusters, the modularity is represented by a value obtained by subtracting the square of a ratio of the total number of edges of the nodes included in the cluster to the total number of edges of the entire graph from the total number of edges in the cluster and summing values of all the clusters. In a method of dividing a cluster, the modularity increases as the inside of the cluster is connected by more edges and the inside of the cluster is not connected to the outside of the cluster.

The closeness centrality is a reciprocal of an average value of distances (shortest path lengths) from a node to all other nodes.

The node betweenness centrality is an index value indicating how much a node of interest is included in the shortest path between the other two nodes.

The edge betweenness centrality is an index value obtained by applying the node betweenness centrality to an edge, and is an index value indicating how much an edge exists on the shortest path between nodes.

The mean distance is an index value obtained by adding the shortest distances between pairs of all nodes and dividing the sum by the total number of pairs.

The graph density is an index value obtained by dividing the number of edges of a network graph by the total number of edges when all nodes of the network graph are connected by edges.

The link efficiency is an index value for evaluating the strength of combination of network graphs. Specifically, for example, the link efficiency is a value obtained by subtracting, from 1, a value obtained by dividing the mean distance by the total number of edges.

The clustering coefficient is an index value for evaluating the density of the network graph. Specifically, for example, the clustering coefficient is a value obtained by dividing the actual number of links between adjacent nodes by the number of possible links for a certain node and averaging the values of all nodes.

The graph assortativity is a correlation coefficient of the degree between connection nodes, and a positive value indicates that a high-degree node is likely to be adjacent to a high-degree node, and a negative value indicates that a high-degree node is likely to be adjacent to a low-degree node.

The graph output program 126 is a program that causes the processor 111 to execute a process of outputting the first network graph, the second network graph, and the third network graph via the user interface 113 or the personal devices 150.

The content output program 127 is a program that causes the processor 111 to execute a process of outputting content to the personal devices 150 of the participants. The content includes the graph features described above and promotion information for promoting participants for opinion consensus or human relation building. The promotion information is automatically generated by a known artificial intelligence agent as in PTL 3, or is input from the user interface 113 by an operation of a facilitator.

As described above, in the consensus building support system 100, it is possible to visualize the distribution of opinions of the participants based on human relations between the participants and the difference degree between opinions. In addition, by visualizing the distribution of opinions, it is possible to easily grasp a small number of opinions, central opinions, and human relations therearound. Accordingly, it is possible to support fair consensus building while considering the minority.

### <Consensus Building Support Process>

Next, the consensus building support process executed by the consensus building support device 110 will be specifically described. Here, a process of supporting consensus building based on the second network graph will be described.

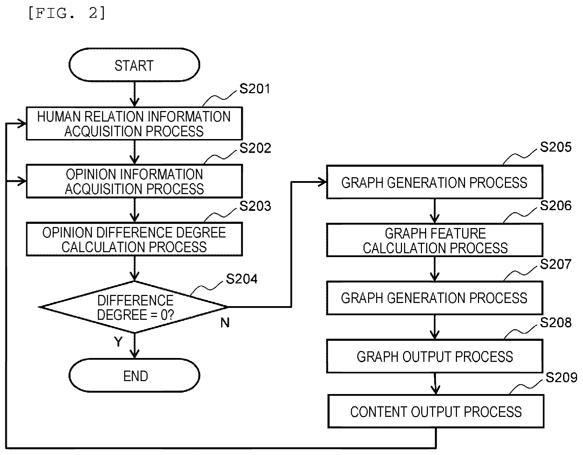

FIG. 2 is a flowchart illustrating a consensus building support processing procedure example executed by the consensus building support device 110. First, the consensus building support device 110 executes a human relation information acquisition process according to the human relation information acquisition program 121 (step S201). Next, the consensus building support device 110 executes an opinion information acquisition process according to the opinion information acquisition program 122 (step S202). Next, the consensus building support device 110 executes a calculation process of a difference degree between opinions according to the opinion difference degree calculation program 123 (step S203).

Next, the consensus building support device 110 determines whether the difference degree between opinions of all the participants is 0, that is, whether the consensus of all participants is achieved according to the opinion difference degree calculation program 123 (step S204). The difference degree 0 indicates that there is no difference in the opinions for all the participants, that is, the consensus of all the participants is achieved. When the difference degree between opinions is 0 (step S204: Yes), the consensus building support process ends.

On the other hand, when the difference degree between opinions is not 0 (step S204: No), the process proceeds to step S205.

The consensus building support device 110 executes a graph generation process of generating the first network graph and the second network graph according to the graph generation program 124 (step S205).

Next, the consensus building support device 110 executes a graph feature calculation process of calculating the graph features in the first network graph or the second network graph according to the graph feature calculation program 125 (step S206).

The consensus building support device 110 executes a graph generation process of generating a third network graph based on the graph features according to the graph generation program 124 (step S207).

The consensus building support device 110 executes a graph output process of outputting the first network graph, the second network graph, or the third network graph via the user interface 113 or the personal devices 150 according to the graph output program 126 (step S208).

The third network graph includes, for example, a community detected by clustering based on modularity, a node having a high closeness centrality or node betweenness centrality, or an edge having a high edge betweenness centrality. These nodes, edges, or communities are highlighted at an output destination of the third network graph. The community is a node group in the clustered cluster.

The consensus building support device 110 executes a content output process of outputting content including the graph features and the promotion information via the user interface 113 or the personal device 150 according to the content output program 127 (step S209). For example, the consensus building support device 110 outputs, as a line graph, a time-series change in a numerical value of the mean distance, the graph density, the link efficiency, the clustering coefficient, or the graph assortativity through a consensus building process.

When step S209 is executed, in a case where the consensus building support device 110 outputs the promotion information for promoting the human relation, the process returns to the human relation information acquisition process (step S201), and in a case where the consensus building support device 110 outputs the promotion information for promoting the consensus of the opinions, the process returns to the opinion information acquisition process (step S202). In any case, the consensus building process of steps S201 to S209 is repeated until the difference degree between opinions is 0, that is, until the consensus of all participants is achieved.

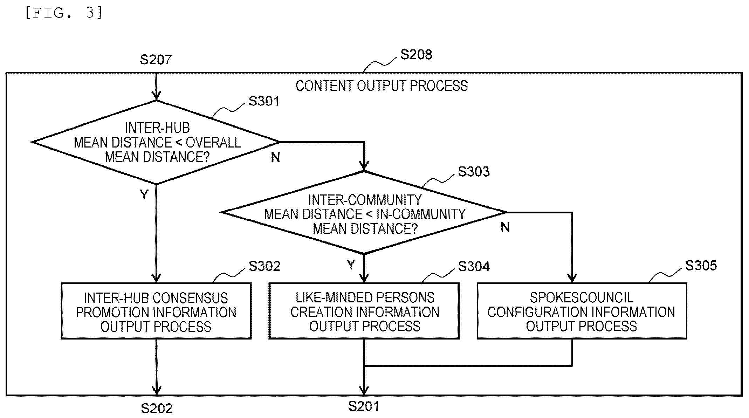

FIG. 3 is a flowchart illustrating an internal processing procedure example of the content output process (step S209) in FIG. 2. First, in step S301, a node having a high closeness centrality or node betweenness centrality in the third network graph is set as a hub. The consensus building support device 110 determines whether an inter-hub mean distance in the second network graph is smaller than a mean distance of the overall second network graph based on a calculation result of the graph feature calculation process (step S206) (step S301). The inter-hub mean distance is an index value obtained by adding the shortest distance between pairs of all hubs and dividing a sum by the total number of pairs.

When the inter-hub mean distance is smaller than the mean distance of the overall second network graph (step S301: Yes), the process proceeds to step S302. When the inter-hub mean distance is not smaller than the mean distance of the overall second network graph (step S301: No), the process proceeds to step S303.

In step S302, the consensus building support device 110 executes an inter-hub consensus promotion information output process. That is, the consensus building support device 110 outputs promotion information for promoting a consensus to a participant corresponding to a hub having a high closeness centrality or betweenness centrality.

This is because, considering that the inter-hub mean distance is smaller than the overall mean distance (step S301: Yes), the consensus between the hubs is more likely to be obtained than all the participants, and it is considered that a hub having a high centrality has a large influence on the participants of the nodes around the hub. Specifically, the consensus building support device 110 outputs, via the user interface 113 or the personal devices 150, to a participant corresponding to a hub having a high closeness centrality or betweenness centrality, promotion information for promoting mutual discussion or compromise of opinions, together with opinions and the difference degree between opinions. Thereafter, the process returns to step S202.

Since it takes time to compromise the discussions and opinions between the participants, the consensus building support device 110 re-executes the opinion information acquisition process (step S202) after a predetermined time elapses. Alternatively, the consensus building support device 110 may re-execute the opinion information acquisition process (step S202) when receiving a re-execution instruction of the opinion information acquisition process (step S202) from a facilitator.

In step S303, the consensus building support device 110 determines whether a mean distance between the communities (inter-community mean distance), which is a cluster calculated by modularity, is smaller than an in-community mean distance based on the calculation result of the graph feature calculation process (step S206).

The inter-community mean distance is an index value obtained by adding the shortest distance between all pairs across the community and dividing the sum by the total number of the pairs. The in-community mean distance is an index value obtained by adding the shortest distances between pairs of all nodes in a community, dividing the sum by the total number of the pairs, and further averaging the values for all the communities.

When the inter-community mean distance is small (step S303: Yes), the process proceeds to step S304, and when the inter-community mean distance is not small (step S303: No), the process proceeds to step S305.

In step S304, the consensus building support device 110 executes a like-minded persons relation building content output process. That is, the consensus building support device 110 outputs the promotion information for prompting the participants who have no human relation but have same or similar opinions to perform the like-minded person relation building. This is because, considering that the inter-community mean distance is smaller than the in-community mean distance (step S303: Yes), the difference degree between opinions in the community is large, and it is considered better to perform relation building between like-minded persons and then perform consensus building between the like-minded persons than to make a consensus between participants in the community.

Specifically, the consensus building support device 110 specifies a pair of participants having no human relation with each other between the communities and opinions of the pair of participants, and if the opinions are the same or similar opinions, the consensus building support device 110 outputs, to the personal devices 150 of the pair of participants, information (unique ID or attribute data) on the participant of the other party and promotion information for promoting the start of mutual opinion exchange. Thereafter, the process returns to step S201.

Since it takes time to exchange opinions between participants, the consensus building support device 110 re-executes the human relation information acquisition process (step S201) after a predetermined time elapses. Alternatively, the consensus building support device 110 may re-execute the human relation information acquisition process (step S201) when receiving a re-execution instruction of the human relation information acquisition process (step S201) from the facilitator.

In step S305, the consensus building support device 110 executes a spokescouncil configuration promotion information output process. That is, the consensus building support device 110 outputs, to the personal devices 150 of all the participants, the promotion information for promoting the relation building for configuring the spokescouncil.

The spokescouncil is an equality-oriented conference form in which a representative of a community called a spoke performs consensus building in each community and performs consensus building between the communities by the spokes to achieve the consensus of all participants.

That is, in the spokescouncil, the mutual relation building between all the participants in the community and the mutual relation building between all the spokes are performed. In this case, the state corresponds to a state in which the inter-hub mean distance is larger than the overall mean distance such that the difference degree between opinions between the hubs of the community is large (step S301: No).

This is because, in consideration of a difference degree state in which in-community mean distance is smaller than the inter-community mean distance, such as a state in which the difference degree between opinions is small in the community (step S303: No), it is considered that it is desirable to configure a spokescouncil in which the hub is a spoke.

Specifically, the consensus building support device 110 outputs, to the personal device 150 of a participant corresponding to a hub in each community (a node having the largest degree (the largest number of edge connections) in the community), a message notifying that the participant becomes a spoke and promotion information for promoting relation building with all participants in the community and exchange of opinions. The consensus building support device 110 outputs, to the personal devices 150 of the other participants, promotion information for promoting relation building with spokes in the community and all participants and exchange of opinions. Thereafter, the process returns to step S201.

Since it takes time to perform relation building or exchange opinions between participants, the consensus building support device 110 re-executes the human relation information acquisition process (step S201) after a predetermined time elapses. Alternatively, the consensus building support device 110 may re-execute the human relation information acquisition process (step S201) when receiving the re-execution instruction of the human relation information acquisition process (step S201) from the facilitator.

As described above, the consensus building support device 110 outputs the human relation, the difference degree between opinions, the first network graph, the second network graph, the third network graph, the graph features, and the promotion information. Accordingly, it is possible to perform efficient facilitation and to support a process suitable for the consensus building of all participants.

This process is not consensus building by majority decision but consensus building through "human relation" based on a modularity, a closeness centrality, a betweenness centrality, and an edge betweenness centrality. In this process, all participants share content, and thus consensus building is formed in consideration of minority. Further, in this process, since the consensus involves commitment of all participants, it is considered that the implementation of the consensus content after that is also maintained.

Therefore, the consensus building support system 100 can support consensus building that enables fairness, efficiency, and stability. By outputting a plurality of options when outputting contents or acquiring opinion information and simultaneously outputting information based on scientific grounds or future prediction to participants, it is possible to perform consensus building with rationality.

Although step S201 to step S209 are sequentially executed in FIG. 2, the order of step S201 and step S202 may be changed, and step S206 to step S207, step S208, and step S209 may be executed in parallel.

For example, the process transitions from step S201 to step S205 and step S206, and an organizer of the conference or a user who uses the consensus building support device 110, such as a facilitator, once analyzes the closeness centrality, the node betweenness centrality, the edge betweenness centrality, the community, and the like based only on the human relation, specifies an important person involved in the consensus building, and then returns to step S202 to advance a consensus building process. Further, step S207 and step S208 may be omitted, and only step S209 may be output.

In step S203, the consensus building support device 110 calculates the difference degree between opinions from a degree of approval or disapproval, an allowable range of the preference order, and the number of replacements. Alternatively, the difference degree between opinions may be acquired by the organizer of the conference or the user who uses the consensus building support device 110, such as a facilitator, directly asking a participant about a subjective separation between the participant and another participant and storing the result in the storage 112 or the database 140 via the user interface 113.

Further, in step S205, the consensus building support device 110 generates the second network graph in which the difference degree between opinions is set as an edge weight. In order to take more the minority into consideration, an edge or a node may be weighted in accordance with an age, a gender, an occupation, the profession, a job title, an income, or a family structure, or the edge may be modified from undirected to directed.

Further, in step S206, the consensus building support device 110 uses the modularity, the closeness centrality, the betweenness centrality, the edge betweenness centrality, the mean distance, the graph density, the link efficiency, the clustering coefficient, and the graph assortativity as the graph features, but may use the graph diameter (greatest distance), the graph radius (eccentricity), the node connectivity, the edge connectivity, the graph reciprocity, the correlation similarity, the mean degree, and the like, and may output the graph in step S207 or output the graph features in step S208 based on these.

Further, in step S209, the consensus building support device 110 determines the output content of the content using the inter-hub mean distance and the overall mean distance, or the inter-community mean distance and the in-community mean distance. The output content of the content may also be determined using other graph features described above, and a process different from the process shown in step S301 to step S305 may be executed.

The different process is, for example, a process of adding an edge to another node with respect to a node having a small closeness centrality, a process of randomly adding an edge to the entire network graph to increase the graph density, a process of adding an edge between a pair of nodes having a large distance to increase the link efficiency, and a process of adding an edge between neighboring nodes of a certain node to increase the clustering coefficient.

In addition, in step S209, the consensus building support device 110 outputs a content for prompting the consensus or the relation building, but may output a new option for reducing the difference degree between opinions as the content based on at least one of the first network graph, the second network graph, or the third network graph and the graph features, and return to step S202 to acquire the opinion information again. For example, the storage 112 may store an advantage and a disadvantage as features corresponding to each option, and the consensus building support device 100 may extract an option preferred by a node having a difference degree between opinions equal to or greater than a threshold value in the second network graph or an option preferred by a node having the closeness centrality or the node betweenness centrality equal to or greater than a threshold value in the third network graph, read the advantage and the disadvantage of the extracted option from the storage 112, and output the read advantage and disadvantage as contents. In addition, the consensus building support device 100 may output, as an editing target content, an option having a common advantage and excluding the disadvantage based on the advantage and the disadvantage of the extracted option. The editing target content is edited by an operation of a facilitator.

In addition, in the consensus building support system 100, data such as the human relation information, the opinion information, and the content is transmitted and received between the consensus building support device 110 and the personal device 150 of the participant via the network 130. It is also possible to adopt a form in which information exchange or consent is performed directly between participants without using the personal device 150, a form in which information exchange or consent is performed directly between a facilitator and a participant, and a form in which information exchange by the personal device 150 is performed in combination with direct consent. The human relation information and the opinion information based on the direct information exchange and the consent in the consensus building support device 110 can be updated by the participant inputting the human relation information and the opinion information again via the personal device 150 or the facilitator inputting the human relation information and the opinion information via the user interface 113.

### <Data Output Example>

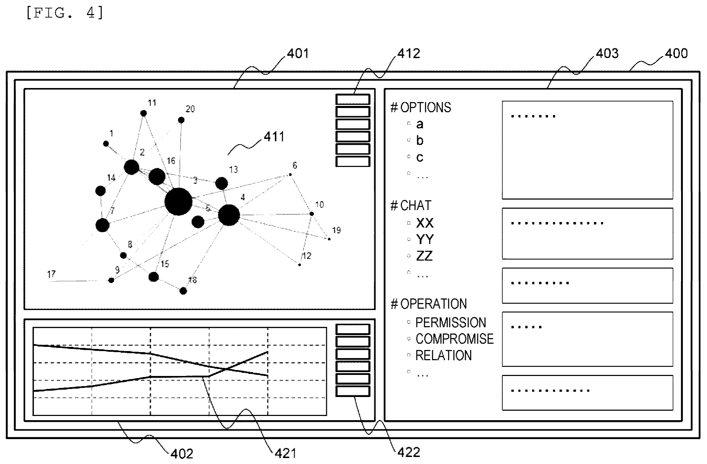

FIG. 4 is a diagram illustrating a data output example in the consensus building support device 110. The display 400 is connected to the user interface 113 of the consensus building support device 110 and outputs screens 401 to 403.

A network graph 411 is displayed on the screen 401 by the graph generation process (steps S205 and S207). The network graph 411 is at least one of the first network graph to the third network graph. The button 412 is a graphical user interface (GUI) for selecting a network graph based on the first, second, or third modularity, a closeness centrality, a betweenness centrality, and an edge betweenness centrality.

In the network graph 411, a numeric number indicating a unique ID of a participant is displayed in each node, and a name or a nickname may be displayed instead of the unique ID of the participant as long as there is no problem from the viewpoint of personal information protection. For example, attribute information such as age or gender may be displayed as a pop-up.

On the screen 402, a line graph 421 indicating a time-series change of the graph feature is displayed by step S208. The button 422 is a GUI for selecting a mean distance, a graph density, link efficiency, a clustering coefficient, or graph assortativity among the graph features.

On the screen 403, contents of operations such as a plurality of options, discussions of participants related to the options, conversations by chatting between participants or between participants and facilitators, and generation and input of contents for prompting participants to make a consensus or build a relation by permission or compromise used in the content output program 127 in step S209 are output. The output of these contents is selected from a menu on the left side of the screen 403.

According to FIG. 4, the facilitator can overlook, as a dashboard, the network graph 411, the line graph 421, and the contents in the screen 403 including the discussions and conversations of the participants, and the promotion information for promoting consensus and relation building, and can perform more efficient facilitation.

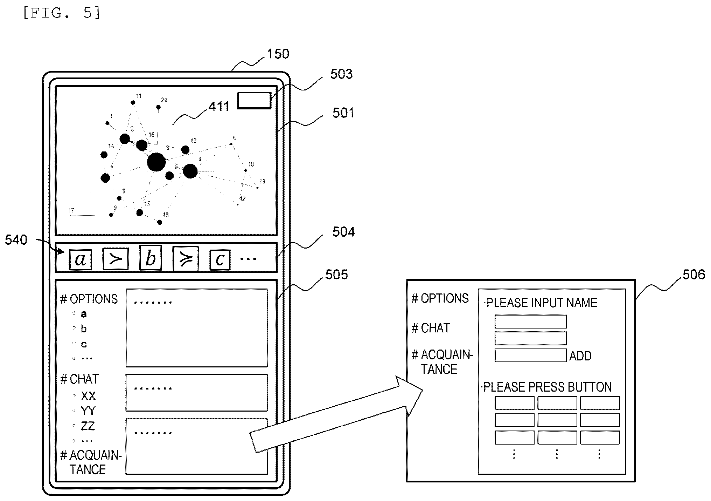

FIG. 5 is a diagram illustrating a data output example in the personal device 150. The personal device 150 is an example of the personal devices 150, is connected to the consensus building support device 110 via the network **interface** 114 and the network 130, and displays content by content output process (step S209).

The network graph 411 is displayed on the screen 501 of the personal device 150 by the graph output process (step S208). In the network graph 411, the unique ID, name, or nickname of the participant is displayed in each node, and the node of the participant himself or herself is highlighted. The button 503 is for selecting the network graph 411 based on the first, second, or third modularity, the closeness centrality, the betweenness centrality, and the edge betweenness centrality from a pull-down menu.

On a screen 504, a preference order 540 constituted with inequalities of a plurality of options and a selection order symbol is displayed as an opinion of a participant having the personal device 150. Here, a, b, c,... are options on a screen 505.

The selection order symbols include a more than symbol ">", a more than or equal to symbol "≥", a more than or nearly equal to symbol, and a nearly equal to symbol.

The more than symbol ">" is a symbol indicating that an option on the right side than the left side is preferred. The more than or equal to symbol "≥" is a symbol indicating that an option on the right side than the left side is preferred or equal. The more than or nearly equal to symbol is a symbol indicating that an option on the right side than the left side is preferred or substantially equal. The nearly equal to symbol is a symbol indicating that an option on the left side is substantially equal to an option on the right side.

Here, in a case where a more than or nearly equal to symbol or a nearly equal to symbol is selected by a participant, it is determined that the left side and the right side are in an indifferent relation, that is, both are in an allowable relation. When the participant changes the opinion toward the consensus, the option or the preference order symbol can be changed by a button, and the content thereof is transmitted from the personal device 150 to the consensus building support device 110.

The screen 505 displays the contents of the plurality of options a, b, c,..., discussions of participants regarding the plurality of options a, b, c, ..., conversations by chatting between participants or between participants and facilitators, and promotion information by the content output process (step S209). The display of these contents is selected from a menu on the left side of the screen 505. Input relating to discussions, conversations, relation with other participants, and reports relating to human relations including acquaintances and the like is also performed from the screen 505.

A screen 506 is an example of a screen on which the participants themselves report the human relation information. When an acquaintance is selected from the menu of the screen 505, the personal device 150 displays the screen 506. From the screen 506, a name or a nickname can be input as a name of the acquaintance, or a button can be pressed from a list of names. These pieces of input information are transmitted to the consensus building support device 110 and stored in the storage 112 or the database 140 as human relation information.

According to FIG. 5, it is possible for the participant to reconsider the preference order for the plurality of options according to the promotion information for promoting the consensus while checking the position of the participant in the first network graph, the second network graph, or the third network graph, and to establish a relation with other participants according to the promotion information for promoting the relation building, and a process for consensus of all participants is promoted.

This effect is not limited to the configurations of the screens 501, 504, and 505 and the button 503 illustrated in FIG. 5, and other configurations may be used. On the screen 504, the participant is caused to select the preference order for the plurality of options and the preference order is displayed as it is, and alternatively the degree of approval or disapproval for each option may be input and, for example, a bar graph may be displayed. Although the personal device 150 is used in FIG. 5, a personal computer, a tablet terminal, another smart device, or the like may be used as the personal device 150.

### <Database>

Next, information stored in the storage 112 or the database 140 will be described.

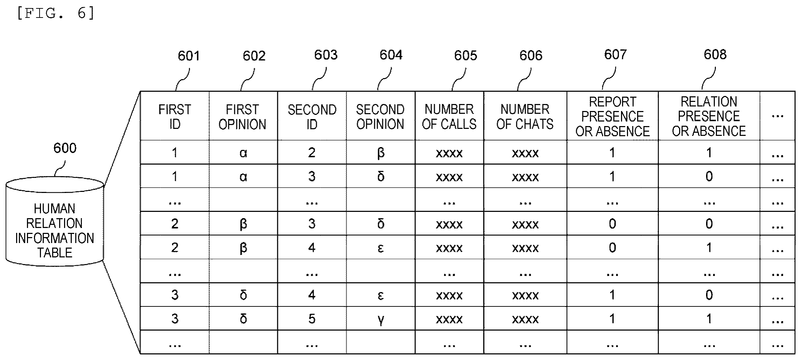

FIG. 6 is a diagram illustrating an example of a human relation information table. The human relation information table includes human relation information. The human relation information is information in which human relations and opinion history information, human relation information, and opinions are incorporated.

The human relation information table 600 is history information of human relations and opinions stored in the storage 112 or the database 140 in step S201 and step S202. Specifically, for example, the human relation information table 600 includes, as fields, a first ID 601, a first opinion 602, a second ID 603, a second opinion 604, the number of calls 605, the number of chats 606, report presence or absence 607, and relation presence or absence 608.

The first ID 601 is identification information for uniquely specifying a first participant.

The first opinion 602 is history information indicating an opinion of the first participant. For example, the first opinion 602 is the preference order 540 of the first participant regarding the content discussed with a second participant.

The second ID 603 is identification information for uniquely specifying a second participant whose human relation with the first participant is to be configured.

The second opinion 604 is history information indicating an opinion of the second participant. For example, the second opinion 604 is the preference order 540 of the second participant regarding the content discussed with the first participant.

The second opinion 604 is character string data indicating a message that the personal device 150 of the second participant has transmitted to the personal device 150 of the first participant by a message application.

The number of calls 605 is the number of times the first participant and the second participant have made a call between the personal device 150 of the first participant and the personal device 150 of the second participant. The number of calls 605 is counted, for example, from call history data acquired by the consensus building support device 110 from either the personal device 150 of the first participant or the personal device 150 of the second participant.

The number of chats 606 is the number of times the first participant and the second participant chat with a message application between the personal device 150 of the first participant and the personal device 150 of the second participant (the number of times the message is transmitted). The number of chats 606 is counted, for example, from the transmission history data of the message acquired by the consensus building support device 110 from the personal device 150 of the first participant and the personal device 150 of the second participant.

The report presence or absence 607 is a flag indicating whether it is reported that the first participant has a human relation with the second participant. "1" indicates that it is reported that the first participant has a human relation with the second participant, and "0" indicates that it is reported that the first participant has no human relation with the second participant.

For example, the personal device 150 of the participant transmits, to the consensus building support device 110, report data including the unique ID of the other party for which the human relation is built, for example, by an input from the screen 505. The consensus building support device 110 specifies, from the human relation information table 600, an entry in which the unique ID of the participant of the personal device 150 of a transmission source is the first ID 601 and the unique ID of the other party is the second ID 602, and updates the entry to "1" when the report presence or absence 607 is "0".

The report data includes the unique ID of the other party, and may be attribute data of the other party. In this case, the consensus building support device 110 may read the unique ID of the other party using attribute data of the other party as a key and set the unique ID in the second ID 602.

The relation presence or absence 608 is a flag indicating the presence or absence of a relation in the preliminary investigation. "1" indicates that the first participant has a human relation with the second participant as a result of the preliminary investigation, and "0" indicates that the first participant has a human relation with the second participant.

The preliminary investigation is a process in which the consensus building support device 110 inquires of the personal device 150 whether there is a human relation in advance, and acquires an answer result from the personal device 150. The answer result includes a combination of the unique ID of a participant of the personal device 150 of the inquiry destination and the unique ID of the other party having a human relation.

The consensus building support device 110 specifies, from the human relation information table 600, an entry in which the unique ID of the participant of the personal device 150 of the inquiry destination is the first ID 601 and the unique ID of the other party is the second ID 602, and updates the entry to "1" when the relation presence or absence 608 is "0".

The answer result includes the unique ID of the other party, and may be attribute data of the other party. In this case, the consensus building support device 110 may read the unique ID of the other party using attribute data of the other party as a key and set the unique ID in the second ID 602.

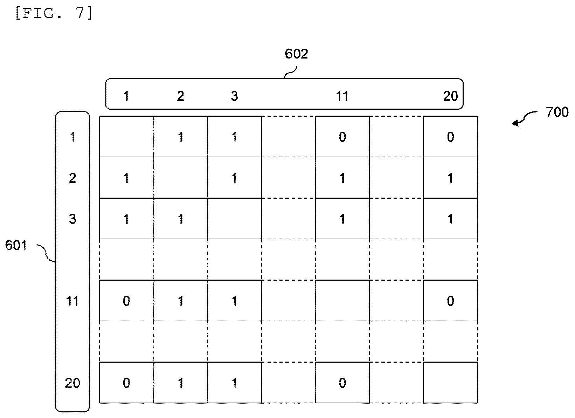

FIG. 7 is a diagram illustrating an example of first human relation matrix data. The first human relation matrix data 700 is data extracted from the human relation information table 600 and stored in the storage 112 or the database 140. The first human relation matrix data 700 indicates the presence or absence of a human relation including the first ID 601 and the second ID 602. When a value of a matrix component specified by the first ID 601 and the second ID 602 is "1", it indicates that there is a human relation between the first participant and the second participant, and when the value is "0", it indicates that there is no human relation between the first participant and the second participant.

Specifically, for example, when at least one of the report presence or absence 607 and the relation presence or absence 608 is "1", the value of the matrix component specified by the first ID 601 and the second ID 602 is set to "1", and when both the report presence or absence 607 and the relation presence or absence 608 are "0", the value of the matrix component specified by the first ID 601 and the second ID 602 is set to "0".

Diagonal components in which the first ID 601 and the second ID 602 have the same ID are blank. This is to prevent the edges of the self-loop from being drawn when the first network graph is generated in step S205.

With such first human relation matrix data 700, the consensus building support device 110 can specify the presence or absence of a human relation between the first participant and the second participant.

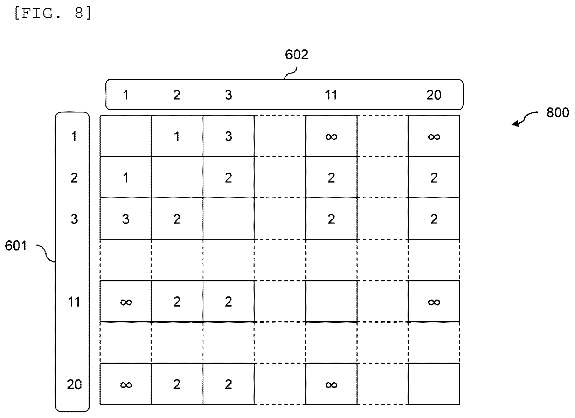

FIG. 8 is a diagram illustrating an example of second human relation matrix data. The second human relation matrix data 800 is data in which the difference degree between opinions extracted from the human relation information table 600 and stored in the storage 112 or the database 140 is incorporated.

The second human relation matrix data 800 indicates the difference degree between opinions of the first participant including the first ID 601 and the second participant including the second ID 602. As the value of the matrix component specified by the first ID 601 and the second ID 602 increases more than the value "1", it indicates that there is a difference between opinions of the first participant and the second participant. "0" indicates that there is no difference between opinions of the first participant and the second participant. "∞" indicates that there is no opinion between the first participant and the second participant, that is, at least one of the first opinion 602 and the second opinion 604 is not present.

Diagonal components in which the first ID 601 and the second ID 602 have the same ID are blank. This is to prevent the edges of the self-loop from being drawn when the second network graph is generated in step S205.

The difference degree between opinions is a difference between the first opinion 602 of the first participant specified by the first ID 601 and the second opinion 604 of the second participant specified by the second ID 603. Specifically, for example, the difference degree between opinions is data obtained by quantifying a difference between the preference order 540 specified by the first opinion 602 and the preference order 540 specified by the second opinion 604. An example of calculating a difference degree between opinions will be described later.

Attribute data (not illustrated) such as a name, nickname, age, and gender of a participant is stored in the storage 112 or the database 140 in association with a unique ID of the participant, and can be read as necessary. The unique ID of the participant is applied to the first ID 601 and the second ID 603.

In addition, the opinions of the participants acquired in step S202, that is, the preference order 540 is stored in the storage 112 or the database 140 in association with symbols such as opinions α, β, and γ, and can be read as necessary. The difference degree between opinions is obtained by referring to an argument table based on opinion symbols of two participants.

As described above, the consensus building support device 110 can efficiently execute the human relation information acquisition process (step S201), the opinion information acquisition process (step S202), and the opinion difference degree calculation process (step S203), and can take over the generation of the first network graph and the second network graph in the graph generation process (step S205).

Although the human relation information table 600 is illustrated as an example in FIG. 6, the contents and order of columns and the order of fields can be changed as necessary. Although FIGS. 7 and 7 illustrate the first human relation matrix data 700 and the second human relation matrix data 800 in an adjacency matrix format, a list format or a table format can also be adopted.

### <Difference Degree between Opinions>

Next, the difference degree between opinions will be described.

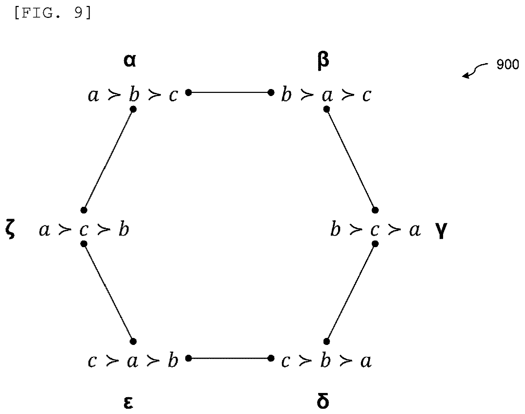

FIG. 9 is a diagram illustrating an example of an opinion network. Here, the opinion network 900 simply indicates a combination of six opinions α (a > b > c), β (b > a > c) , γ (b > c > a), δ (c > b > a), ε (c > a > b), and ζ (a > c > b) for three options a, b, and c.

The opinion network 900 is a network in which opinions are nodes and line segments connecting the preference orders 540 are edges. As illustrated in the opinion network 900, the six opinions α, β, γ, δ, ε, and ζ are associated based on the number of replacements of two adjacent options in the preference order 540. Specifically, when two options of the three options a, b, and c in the preference order 540 are interchanged once, the preference order 540 connected by edges is obtained.

For example, the preference order 540 indicated by the opinion α is "a > b > c", and the preference order 540 indicated by the opinion β is "b > a > c". When the adjacent "a" and "b" of the preference order 540 "a > b > c" indicated by the opinion α are interchanged, the preference order 540 indicated by the opinion β becomes "b > a > c".

Therefore, when an option of the opinion α is replaced twice, the opinion α is converted into the opinion γ, and when the option of the opinion α is replaced twice, the opinion α is converted into the opinion δ. The number of replacements is the difference degree between opinions. In addition, there are a clockwise direction and a counterclockwise direction as directions in which an opinion of a conversion destination is reached from a certain opinion, but the smaller number of replacements between the number of replacements in the clockwise direction and the number of replacements in the counterclockwise direction is adopted as a difference degree between opinions. That is, the shortest number of hops from one node to another node is the difference degree between opinions.

For example, the number of replacements from the opinion α to the opinion γ is "2" in the clockwise direction and "4" in the counterclockwise direction, but "2" having the smaller number of replacements is adopted as a difference degree between the opinion α and the opinion γ. Therefore, in the example of FIG. 9, the difference degree between opinions is an integer of 0 or more and 3 or less.

When the difference degree between the two participants is 0, it means that the opinions of both participants are the same, and when the difference degree between opinions is equal to or less than a threshold value, it means that the opinions of both participants are similar. The threshold value is set in advance, but in the example of FIG. 9, since the maximum value of the difference degree between opinions is "3", "1" which is an integer equal to or less than half may be set as the threshold value.

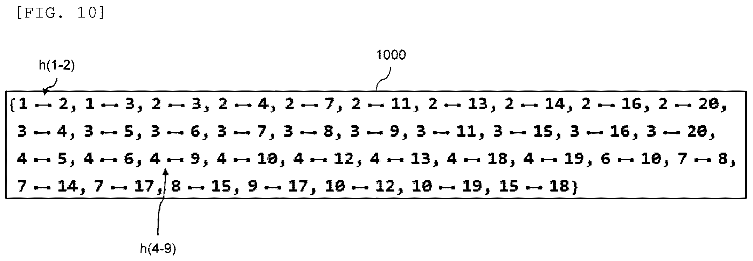

FIG. 10 is a diagram illustrating an example of human relation information. Human relation information 1000 indicates human relations of 20 participants. The human relation information 1000 is a set of human relation data of the first ID 601 and the second ID 603. The human relation data includes a first ID 601 at a left end, a second ID 603 at a right end, and a line segment connecting the first ID 601 and the second ID 603. In the example of FIG. 10, the human relation information 1000 includes 37 kinds of human relation data.

In the following description, a human relation between x and y in FIG. 10 (x is the first ID 601 and y is the second ID 603) is referred to as a human relation h (x-y). When x and y are not specified, the human relation is simply referred to as a human relation h. Similarly, the difference degree between opinions of participants specified by the human relation h (x-y) is denoted by d (x-y). When x and y are not specified, the difference degree between opinions is simply referred to as a difference degree between opinions d.

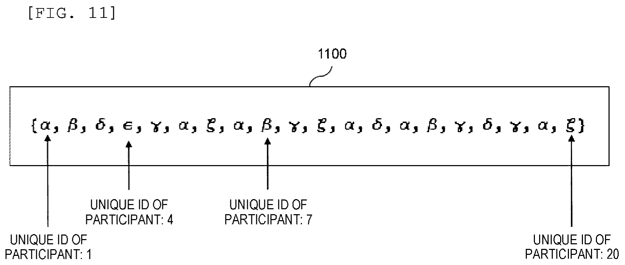

FIG. 11 is a diagram illustrating an example of opinion information. The opinion information 1100 is a set of opinions for each participant. The left end is the unique ID: 1 of a participant, and opinions up to the unique ID: 20 at the right end (any one of six opinions α, β, γ, δ, ε, and ζ illustrated in FIG. 6) are arranged in ascending order of the unique ID.

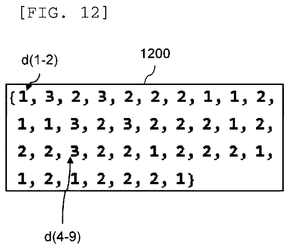

FIG. 12 is a diagram illustrating an example of difference degree information. Difference degree information 1200 indicates a difference degree between opinions in the human relation information 1000 in FIG. 10. For example, in the case of a human relation h (1-2), referring to the opinion information 1100, the first opinion 602 of the first participant whose first ID 601 is "1" is "α", and the second opinion 604 of the second participant whose second ID 603 is "2" is "β".

The difference degree between the opinion α and the opinion β is "1" with reference to the opinion network 900. Therefore, a difference degree between opinions d (1-2) in the human relation h (1-2) is "1".

Similarly, in the case of a human relation h (4-9), referring to the opinion information 1100, the first opinion 602 of the first participant whose first ID 601 is "4" is "ε", and the second opinion 604 of the second participant whose second ID 603 is "9" is "β".

The difference degree between the opinion ε and the opinion β is "1" with reference to the opinion network 900. Therefore, a difference degree between opinions d (4-9) in the human relation h (4-9) is "3".

In FIGS. 10 to 12, the human relation information 1000, the opinion information 1100, and the difference degree information 1200 are illustrated in a list format, and may be illustrated in a table format or an adjacency matrix format as illustrated in FIGS. 7 and 8.

### <Graph Generation Process (Step S205)>

Next, a specific example of the graph generation process (step S205) will be described.

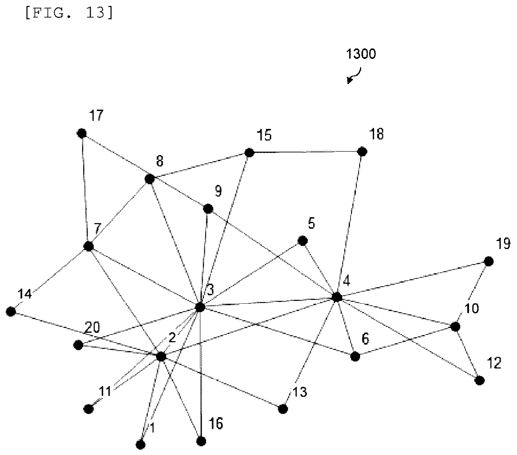

FIG. 13 is a diagram illustrating an example of a first network graph of participants. A first network graph 1300 is a graph in which unique IDs of 20 participants are nodes and 37 human relations are edges based on the human relation information 1000 in FIG. 10. Hereinafter, a node whose unique ID of the participant is # (# is a number) is referred to as a node #.

Further, in FIG. 13, the first network graph 1300 is drawn using a layout method for determining a stable arrangement of nodes by regarding the nodes as charges and the edges as springs.

Although the edge weights are all "1", lengths of the edges change due to the above layout method, and the arrangement of the nodes changes depending on the human relation, that is, the connection of the edges. It can be seen from FIG. 13 that there are many human relations among the participants of the node 2, the node 3, and the node 4, that is, these nodes are the hubs of human relations.

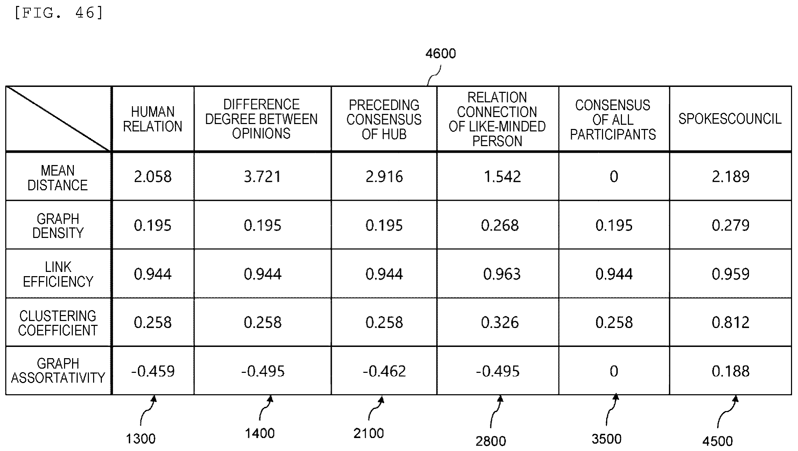

In the first network graph 1300, the mean distance is 2.508, the graph density is 0.195, the link efficiency is 0.944, the clustering coefficient is 0.258, and the graph assortativity is - 0.459 (see Table 4600 in FIG. 46).

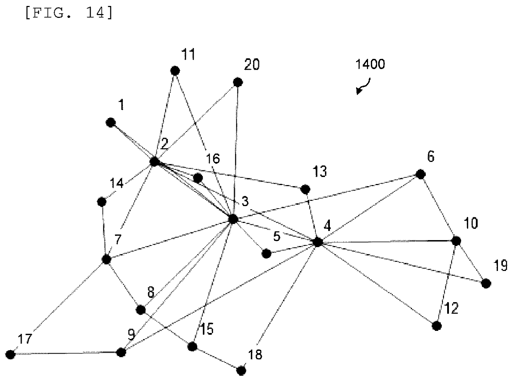

FIG. 14 is a diagram illustrating an example of the second network graph. A second network graph 1400 is a graph in which unique IDs of 20 participants are nodes, 37 human relations are edges, and edge weights are difference degrees of opinions, based on the human relation information 1000 in FIG. 10 and the difference degree information 1200 in FIG. 12.

Compared to FIG. 13, in FIG. 14, it is inferred that the node 3 and the node 4 are relatively close to each other, that is, consensus is easily formed, and the node 17 and the node 19 are relatively far from each other, that is, consensus is not easily formed. In the second network graph 1400, the mean distance is 3.721, the graph density is 0.195, the link efficiency is 0.944, the clustering coefficient is 0.258, and the graph assortativity is -0.459 (see Table 4600 in FIG. 46).

Compared to the first network graph 1300, in the second network graph 1400, the difference degree between opinions is set as the edge weight. Therefore, the second network graph 1400 has a larger mean distance and lower graph assortativity than the first network graph 1300. Since the graph density, the link efficiency, and the clustering coefficient are calculated based on the number of edges, the values do not change unless the structure of the graph changes.

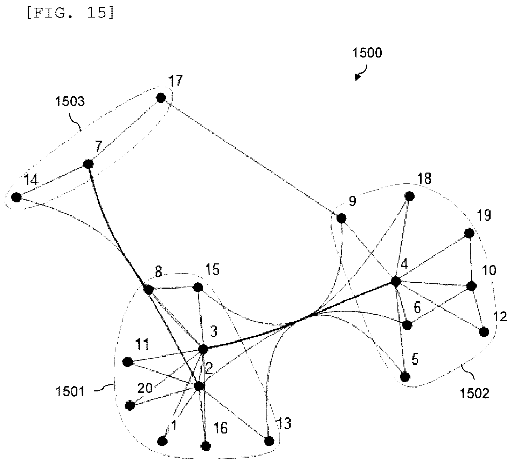

FIG. 15 is a diagram illustrating Example 1 of a third network graph. A third network graph 1500 is a network graph based on the modularity (clustering) of the graph features. In a case where the third network graph 1500 is generated, the consensus building support device 110 calculates a modularity based on the human relation information 1000 in FIG. 10 and the difference degree information 1200 in FIG. 12. Clustering is performed such that a large number of edges are connected to nodes in a community and a small number of edges are connected to nodes in another community.

In FIG. 15, it can be seen that three communities 1501 to 1503 each having the node 3, the node 4, and the node 7 as hubs are formed.

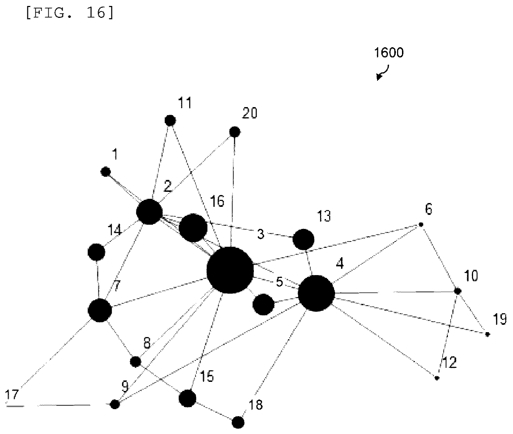

FIG. 16 is a diagram illustrating Example 2 of a third network graph. A third network graph 1600 is a network graph based on the closeness centrality of the graph features. In a case where the third network graph 1600 is generated, the consensus building support device 110 calculates, based on the human relation information 1000 in FIG. 10 and the difference degree information 1200 in FIG. 12, a closeness centrality indicating that a mean distance between a certain node and another node is small. The nodes are displayed larger in accordance with the magnitude of the closeness centrality.

In FIG. 16, it can be read that the node 3 and node 4 have a particularly large closeness centrality, that is, those participants are in the center of the group of opinions of other participants.

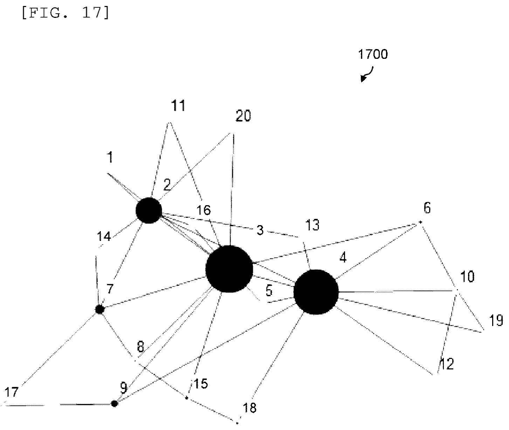

FIG. 17 is a diagram illustrating Example 3 of a third network graph. A third network graph 1700 is a network graph based on betweenness centralities of the graph features. In a case where the third network graph 1700 is generated, the consensus building support device 110 calculates, based on the human relation information 1000 in FIG. 10 and the difference degree information 1200 in FIG. 12, a betweenness centrality indicating that a certain node is on the shortest path of many other node pairs. The nodes are displayed larger in accordance with the magnitude of the betweenness centrality.

In FIG. 17, it can be read that the betweenness centrality between the node 2, node 3, and node 4 is large, that is, the node 2, node 3, and node 4 are centers connecting the relations between other participants.

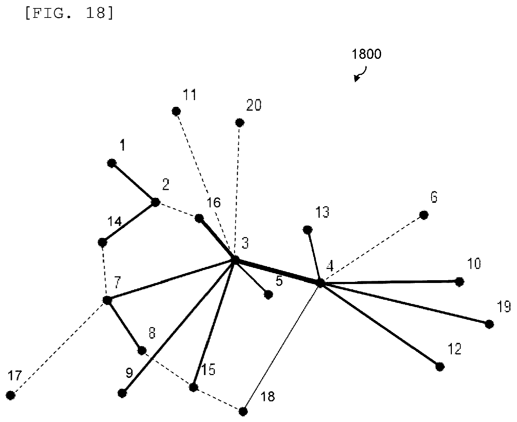

FIG. 18 is a diagram illustrating Example 4 of a third network graph. A third network graph 1800 is a network graph based on the edge betweenness centrality of the graph features. In a case where the third network graph 1800 is generated, the consensus building support device 110 calculates, based on the human relation information 1000 in FIG. 10 and the opinion difference degree information 1200 in FIG. 12, an edge betweenness centrality indicating that there are many shortest paths of node pairs passing through a certain edge. An edge having a large edge betweenness centrality is displayed as a thick line, and an edge having a small edge betweenness centrality is displayed as a dotted line.

In FIG. 18, it can be read that the edge betweenness centrality between the node 3 and the node 4 and the edge betweenness centrality between the node 3 and the node 16 are large, that is, the human relations therebetween are the centers of the human relations between other participants.

When FIGS. 13 to 18 are overlooked, the node 3, the node 4, and the node 7 can be regarded as hubs. The opinions of the node 3, the node 4, and the node 7 are δ, ε, and ζ, respectively, and the inter-hub mean distance is 1.333. Since the inter-hub mean distance is smaller than a mean distance 3.721 of the second network graph 1400, the consensus building support device 110 can output promotion information for promoting consensus to each participant of the node 3, the node 4, and the node 7 according to step S302 in FIG. 3.

In FIGS. 13 to 18, a layout method of a network graph in which a node is regarded as a charge and an edge is regarded as a spring is used, but the present invention is not limited thereto, and other layout methods such as a circular arrangement method, a polygonal arrangement method, a lattice arrangement method, a stacked arrangement method, a linear arrangement method, and a random arrangement method may be used according to the number of participants, a human relation, a difference degree between opinions, and the like.

### [Embodiment 2]

Next, Embodiment 2 will be described. Embodiment 2 illustrates a generation example of a network graph in a case where hubs of participants are prompted to be consensus in advance in step S302 in Embodiment 1. In Embodiment 2, since differences from Embodiment 1 will be mainly described, the same parts as those in Embodiment 1 are denoted by the same signs, and the description thereof will be omitted.

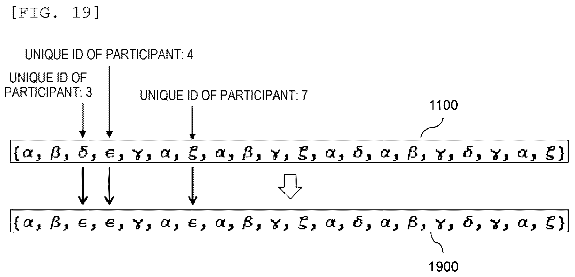

FIG. 19 is a diagram illustrating an update example of opinion information. When the inter-hub consensus promotion information output process (step S302) is executed, the consensus building support device 110 outputs, to the personal device 150, for example, promotion information for promoting consensus to a participant corresponding to a hub having a high closeness centrality or betweenness centrality. This is because, considering that the inter-hub mean distance is smaller than the overall mean distance (step S301: Yes), the consensus between the hubs is more likely to be obtained than all the participants, and it is considered that a hub having a high centrality has a large influence on the participants of the nodes around the hub.

Accordingly, it is assumed that, for example, a participant (node 3) having the opinion δ and a participant (node 7) having the opinion ζ form a consensus with the opinion ε of a participant (node 4) before re-execution of the opinion information acquisition process (step S202).

In this case, the personal device 150 of the participant (node 3) transmits a notification of change from the opinion δ to the opinion ε to the consensus building support device 110. Similarly, the personal device 150 of the participant (node 7) transmits a notification of change from the opinion ζ to the opinion ε to the consensus building support device 110.

Upon receiving the notification of change, the consensus building support device 110 updates the opinion information 1100 to reflect the content of the notification of change. Specifically, for example, in FIG. 19, since the participant (node 3) having the opinion δ and the participant (node 7) having the opinion ζ form a consensus with the opinion ε of the participant (node 4) in the opinion information 1100, the consensus building support device 110 updates the opinion δ of the node 3 and the opinion ζ of the node 7 to the opinion ε of the node 4. The updated opinion information 1100 is referred to as opinion information 1900.

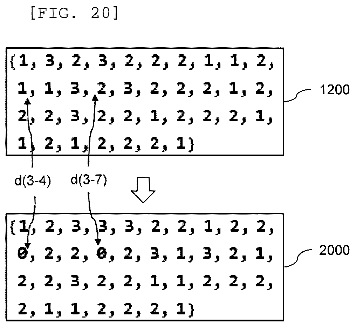

FIG. 20 is a diagram illustrating an update example of the difference degree information 1200. The consensus building support device 110 updates the difference degree information 1200 according to the update of the opinion information 1900 illustrated in FIG. 19. The updated difference degree information 1200 is referred to as difference degree information 2000. In the difference degree information 1200, the difference degree d (3-4) of the human relation h (3-4) is "1", and the difference degree d (3-7) of the human relation h (3-7) is "2".

In the opinion information 1900, since the opinion δ of the node 3 is converted into the opinion ε of the node 4, the difference degree d (3-4) of the human relation h (3-4) is converted into "0". Similarly, in the opinion information 1900, since the opinion ζ of the node 7 is converted into the opinion ε of the node 4, the difference degree d (3-7) of the human relation h (3-7) is also converted into "0".

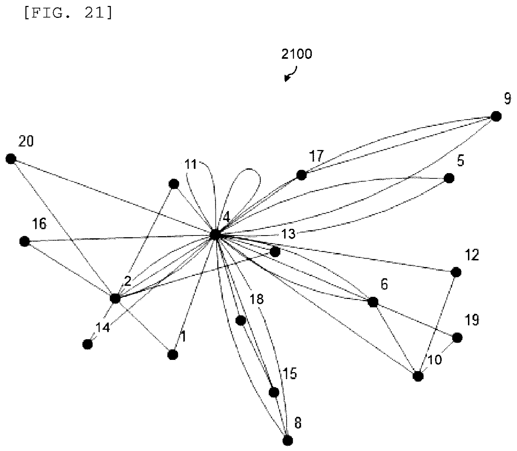

FIG. 21 is a diagram of Example 1 of a second network graph according to Embodiment 2. A second network graph 2100 is a network graph in which the difference degree between opinions of the participants is an edge weight.

The second network graph 2100 is a graph in which the human relation information 1000 in FIG. 10 is an edge and the difference degree information 2000 after conversion in FIG. 20 is an edge weight. In the second network graph 2100, a loop-shaped edge indicates that the difference degree between opinions is "0", and the node 3, the node 4, and the node 7, which are hubs, overlap at the same position (only "4" illustrated in FIG. 21).

For example, when the node 3 and the node 4 overlap each other, two edges from the node 5 to the node 3 and the node 4 are drawn in a curve so as not to overlap each other. In FIG. 21, when the opinions of the participants specified by the node 3, the node 4, and the node 7, which are the hubs, form a consensus with ε, it is suggested that a node 8, a node 9, a node 10, a node 19, and a node 20 are far from the hubs (the node 3, the node 4, and the node 7), that is, it is necessary to build a consensus between the participants of the node 8, the node 9, the node 10, the node 19, and the node 20 and the participants of the hubs (the node 3, the node 4, and the node 7).

In the second network graph 2100, the mean distance is 2.916, the graph density is 0.195, the link efficiency is 0.944, the clustering coefficient is 0.258, and the graph assortativity is - 0.462 (see Table 4600 in FIG. 46). Compared to the network graph 1400, the second network graph 2100 has a smaller mean distance and higher graph assortativity. This is because, in the former case, the participants of the hubs (the node 3, the node 4, and the node 7) form a consensus, and in the latter case, the participants of the hubs (the node 3, the node 4, and the node 7) form a consensus, so that the homophily of other participants as viewed from the participants of the hubs (the node 3, the node 4, and the node 7) has increased.

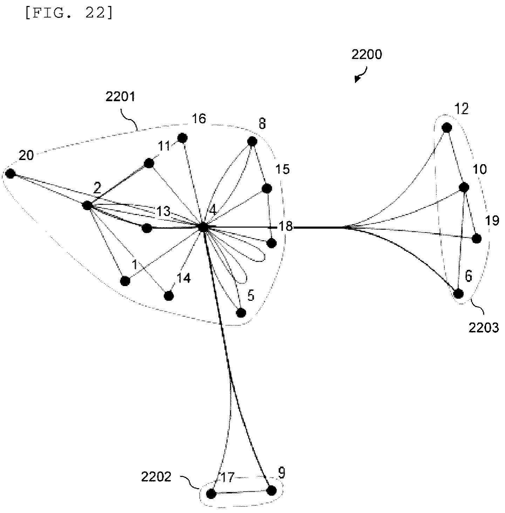

FIG. 22 is a diagram illustrating Example 2 of the second network graph according to Embodiment 2. The second network graph 2200 is a network graph based on the modularity (clustering) of the graph features. In the second network graph 2200, it can be seen that a community 2201 having the node 3, the node 4, and the node 7 as hubs, a community 2202 having the node 9 as a hub, and a community 2203 having the node 10 as a hub are formed.

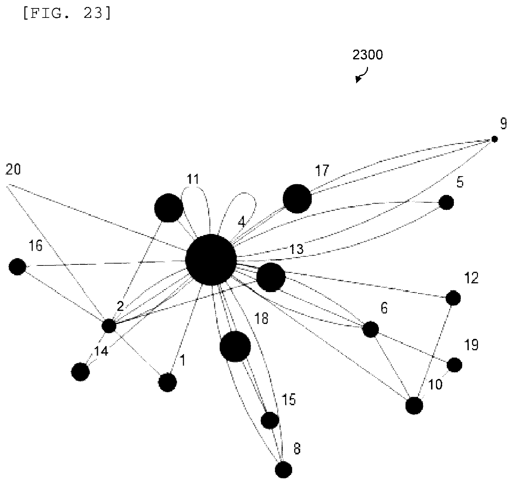

FIG. 23 is a diagram of Example 3 of the second network graph according to Embodiment 2. The second network graph 2300 is a network graph based on closeness centralities of the graph features. In the second network graph 2300, it can be seen that the closeness centrality between the node 11, the node 13, the node 17, and the node 18 is large next to the node 3, the node 4, and the node 7, which are hubs.

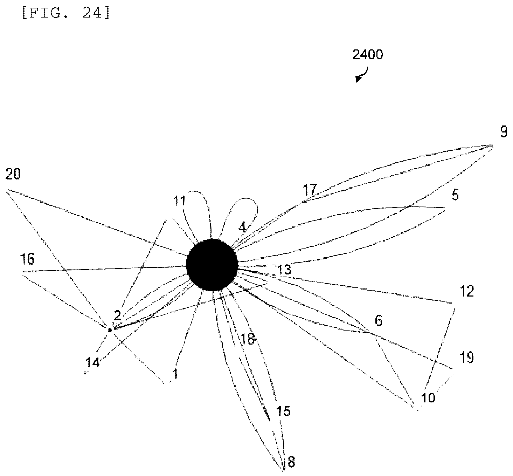

FIG. 24 is a diagram illustrating Example 4 of the second network graph according to Embodiment 2. The second network graph 2400 is a network graph based on betweenness centralities of the graph features. In the second network graph 2400, it can be seen that the betweenness centrality between the node 3, node 4, and node 7, which are hubs, is extracted from other nodes and is large.

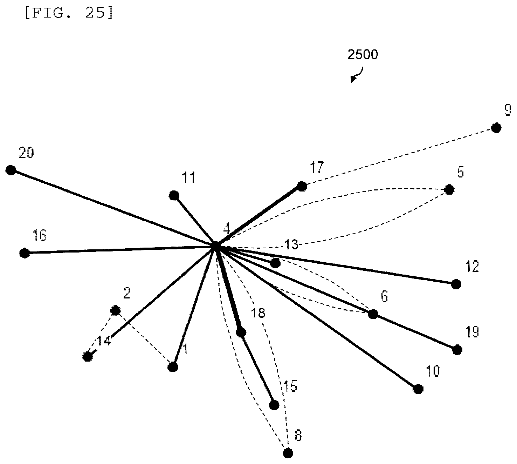

FIG. 25 is a diagram illustrating Example 5 of the second network graph according to Embodiment 2. The second network graph 2500 is a network graph based on edge betweenness centralities of the graph features. In the second network graph 2500, it can be seen that the edge betweenness centrality between the node 3, the node 4, the node 7 (in FIG. 25, the nodes 3 and 7 overlap the node 4), and the node 17 or the node 18, which are hubs, is large.

When FIG. 21 to FIG. 25 are overlooked, it is understood that it is mainly necessary to proceed with consensus building of the node 9 or the node 17 which is a hub of the new community and the node 3, the node 4, and the node 7 which are hubs. Similarly, it is understood that it is necessary to proceed with consensus building of the node 10 or the node 19 which is a hub of the new community and the node 3, the node 4, and the node 7 which are hubs. In addition, it is understood that it is necessary to proceed with consensus building of the node 18 in the same community as the node 3, the node 4, and the node 7, which are hubs, and the node 3, the node 4, and the node 7, which are hubs.

Therefore, in accordance with step S209, the consensus building support device 110 outputs promotion information for promoting the consensus to the personal device 150 of the participant specified by a node to be subjected to the consensus building formation. Then, the process returns to step S202 again. In Embodiment 2, for the sake of simplicity, a case where there are only three selected options a, b, and c has been described, but by presenting an intermediate option of the options a, b, and c as promotion information, it is possible to perform walking toward the consensus, that is, to reduce the difference degree between opinions.

### [Embodiment 3]

Next, Embodiment 3 will be described. Embodiment 3 illustrates a generation example of a network graph in a case where it is prompted to build a relation between the like-minded persons having the same opinion in step S304 in Embodiment 1. In Embodiment 3, since differences from Embodiment 1 will be mainly described, the same parts as those in Embodiment 1 are denoted by the same signs, and the description thereof will be omitted.

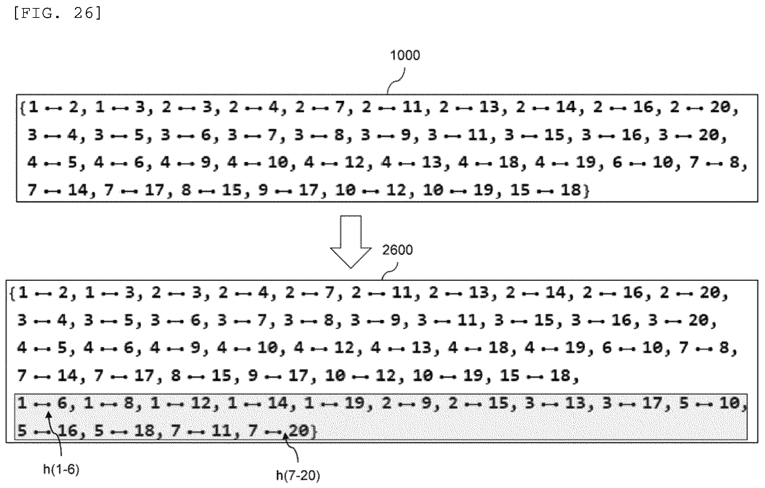

FIG. 26 is a diagram illustrating an update example of the human relation information 1000 according to Embodiment 3. When the like-minded person relation building promotion information output process (step S304) is executed, the consensus building support device 110 outputs, to the personal device 150, for example, promotion information for promoting like-minded person relation building to a participant who has no human relation but has the same or similar opinion. This is because, considering that the inter-community mean distance is smaller than the in-community mean distance (step S303: Yes), the difference degree between opinions in the community is large, and it is considered better to perform relation building between like-minded persons and then perform consensus building between the like-minded persons than to make a consensus between participants in the community.

Accordingly, it is assumed that a new human relation is constructed by building the like-minded person relation, for example, before re-execution of the human relation information acquisition process (step S201). In this case, the personal device 150 of the participant transmits, to the consensus building support device 110, report data including the unique ID of the other party for which the human relation is configured. The consensus building support device 110 specifies, from the human relation information table 600, an entry in which the unique ID of the participant of the personal device 150 of a transmission source is the first ID 601 and the unique ID of the other party is the second ID 602, and updates the entry to "1" when the report presence or absence 607 is "0".

The report data includes the unique ID of the other party, and may be attribute data of the other party. In this case, the consensus building support device 110 reads the unique ID of the other party using attribute data of the other party as a key and set the unique ID in the second ID 602.

In addition, prior to re-execution of the human relation information acquisition process (step S201), the consensus building support device 110 transmits an inquiry about the presence or absence of a human relation to the personal device 150 of the participant, and acquires an answer result from the personal device 150 of the participant. The answer result includes a combination of the unique ID of a participant of the personal device 150 of the inquiry destination and the unique ID of the other party having a human relation.

The consensus building support device 110 specifies, from the human relation information table 600, an entry in which the unique ID of the participant of the personal device 150 of the inquiry destination is the first ID 601 and the unique ID of the other party is the second ID 602, and updates the entry to "1" when the relation presence or absence 608 is "0".

The answer result includes the unique ID of the other party, and may be attribute data of the other party. In this case, the consensus building support device 110 may read the unique ID of the other party using the attribute data of the other party as a key and set the unique ID in the second ID 602.

In this way, the human relation information 1000 is updated to the human relation information 2600. In the example of FIG. 26, the human relation information 2600 is information in which human relations h (1-6), h (1-8), h (1-12), h (1-14), h (1-19), h (2-9), h (2-15), h (3-13), h (3-17), h (5-10), h (5-16), h (5-18), h (7-11), and h (7-20) are newly added to the human relation information 1000.

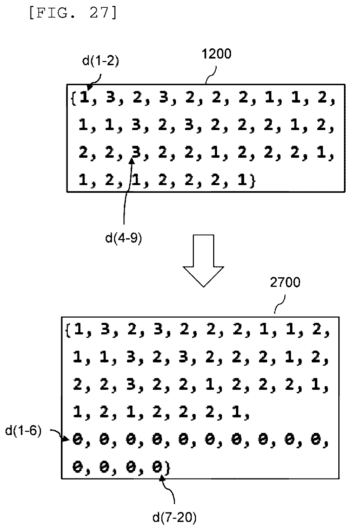

FIG. 27 is a diagram illustrating an update example of the difference degree information 1200 according to Embodiment 3. The consensus building support device 110 updates the difference degree information 1200 based on the updated human relation information 2600 and the opinion information 1100 illustrated in FIG. 11. In the example of FIG. 27, the difference degree information 2700 is information in which difference degree d (1-6), d (1-8), d (1-12), d (1-14), d (1-19), d (2-9), d (2-15), d (3-13), d (3-17), d (5-10), d (5-16), d (5-18), d (7-11), and d (7-20) are newly added to the difference degree information 1200.

In this example, since the opinions of the like-minded persons match each other according to the opinion information 1100, the difference degree degrees d (1-6), d (1-8), d (1-12), d (1-14), d (1-19), d (2-9), d (2-15), d (3-13), d (3-17), d (5-10), d (5-16), d (5-18), d (7-11), and d (7-20) are all "0".

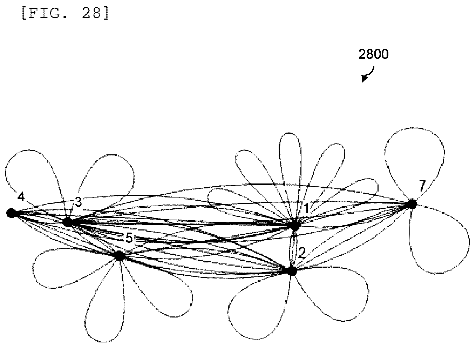

FIG. 28 is a diagram of Example 1 of a second network graph according to Embodiment 3. The second network graph 2800 is a network graph in which the difference degree between opinions d of the participants is an edge weight.

The second network graph 2800 is a graph in which the human relation information 1000 in FIG. 10 is an edge and the difference degree information 2700 in FIG. 27 is an edge weight. The loop-shaped edge indicates that the difference degree between opinions d of the like-minded person is "0".

A node 6, node 8, node 12, node 14, and node 19 overlap a node 1 (opinion α). The node 9 and the node 15 overlap the node 2 (opinion β). Further, the node 13 and the node 17 overlap the node 3 (opinion δ).

The node 16 and the node 18 overlap the node 5 (opinion γ). The node 11 and the node 20 overlap the node 7 (opinion ζ). The node 4 (opinion ε) is a single node that does not overlap other nodes.

The difference degrees between opinions d (1-2), d (3-4), and d (3-5) of the node 1 and the node 2, the node 3 and the node 4, and the node 3 and the node 5, respectively, are "1", and the difference degrees between opinions d (1-5) and d (3-7) of the node 1 and the node 5, and the node 3 and the node 7, respectively, are "2".

In the second network graph 2800, the mean distance is 1.542, the graph density is 0.268, the link efficiency is 0.963, the clustering coefficient is 0.326, and the graph assortativity is - 0.495 (see Table 4600 in FIG. 46). Compared to the network graph 1400, the second network graph 2800 has a small mean distance and a large graph density, link efficiency, and clustering coefficient. This is because the relation of the like-minded persons, that is, the edges are increased.

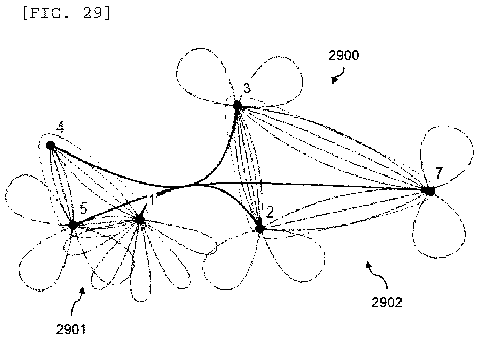

FIG. 29 is a diagram illustrating Example 2 of the second network graph according to Embodiment 3. A second network graph 2900 is a network graph based on the modularity (clustering) of the graph features. It can be seen that the second network graph 2900 is divided into a community 2901 including participants of the node 1, the node 4, and the node 5 and a community 2902 including participants of the node 2, the node 3, and the node 7.

These are communities of opinions α, γ, and ε and communities of β, δ, and ζ in which the difference degree between opinions d is "2" when corresponding to the opinion network 900 in FIG. 9.

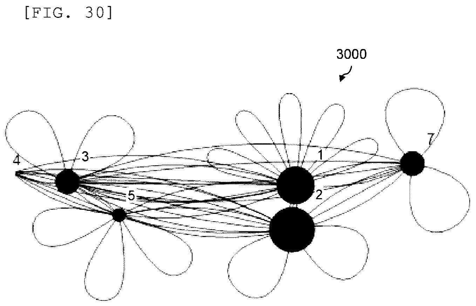

FIG. 30 is a diagram illustrating Example 3 of the second network graph according to Embodiment 3. The second network graph 3000 is a network graph based on closeness centralities of the graph features. In the second network graph 3000, it can be seen that the closeness centrality of the node 2 is the largest.

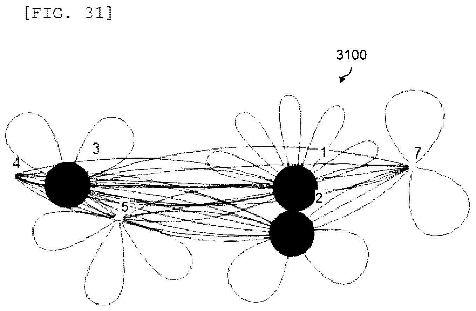

FIG. 31 is a diagram illustrating Example 4 of the second network graph according to Embodiment 3. The second network graph 3100 is a network graph based on betweenness centralities of the graph features. In the second network graph 3100, it can be seen that the node 1, the node 2, and the node 3 have a higher betweenness centrality than that of the other three nodes, that is, the node 4, node 5, and node 7.

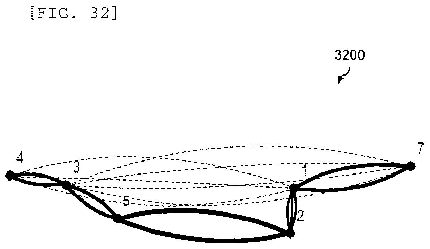

FIG. 32 is a diagram illustrating Example 5 of the second network graph according to Embodiment 3. The second network graph 3200 is based on edge betweenness centralities of the graph features. In the second network graph 3200, it can be seen that the edge betweenness centrality between the node 2 and the node 5 is particularly large.

When FIG. 28 to FIG. 32 are overlooked, it can be seen that a community is formed depending on the difference degree between opinions, and each opinion is the center of the mediation of human relations. In Embodiment 3, in order to illustrate a simple example, there are only six opinions indicating a preference order, and the opinions are aggregated into six nodes, and the community is divided into two. In addition, according to Embodiment 3, as described in the description of S209 in FIG. 3, by presenting an intermediate opinion or option as the promotion information, the overlapping of the community, that is, the relation building for the consensus can be advanced.

In Embodiment 2 in which the inter-hub consensus precedes, the second network graph 2100 is radial, and in Embodiment 5 in which the relation is built for the like-minded person, the second network graph 2800 has a spindle shape. The second network graph 2100 is suitable for a case where an influence of the hub for the consensus is relatively large, and the second network graph 2800 is suitable for a case where an initial human relation is sparse and it is necessary to build a relation for the consensus.

### [Embodiment 4]

Next, Embodiment 4 will be described. Embodiment 4 shows a generation example of a network graph in a case where the consensus of all participants is established in Embodiment 1 to Embodiment 3. In Embodiment 4, since differences from Embodiment 1 will be mainly described, the same parts as those in Embodiment 1 to Embodiment 3 are denoted by the same signs, and the description thereof will be omitted.

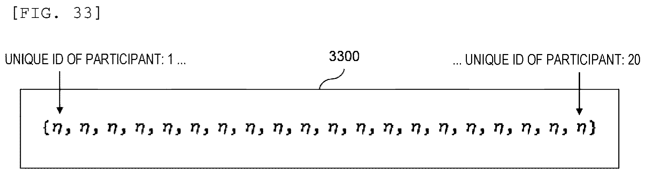

FIG. 33 is a diagram illustrating an example of opinion information according to Embodiment 4. In the opinion information 3300, opinions of all the participants with the unique ID: 1 to 20 are η.

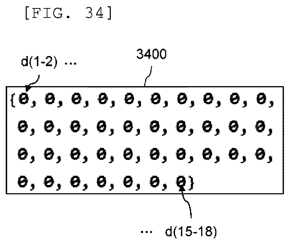

FIG. 34 is a diagram illustrating an example of difference degree information according to Embodiment 4. Since all the opinions in the opinion information 3300 are η, in the difference degree information 3400, all the difference degrees between opinions d in the human relation information 1000 in FIG. 10 are "0".

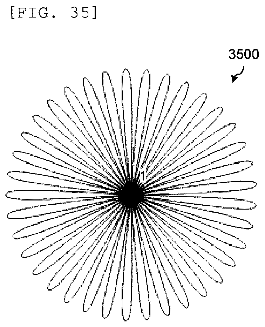

FIG. 35 is a diagram illustrating Example 1 of the second network graph according to Embodiment **4.** The second network graph 3500 is a graph in which the human relation information 1000 in FIG. 10 is an edge and the difference degree information 3400 in FIG. 34 is an edge weight. The loop-shaped edge indicates that the difference degrees between opinions d of all participants are 0, and all nodes other than the node 1 overlap the node 1.

In the second network graph 3500, since all the nodes are equivalent, this means a state in which community division by clustering is not performed and there is one community. In the second network graph 3500, the mean distance is 0, the graph density is 0.195, the link efficiency is 0.944, the clustering coefficient is 0.258, and the graph assortativity is 0 (see Table 4600 in FIG. 46). Since the graph density, the link efficiency, and the clustering coefficient are calculated based on the number of edges, the values of the graph density, the link efficiency, and the cluster coefficient are the same as those of the network graph 1400 even when the edge weight is 0.

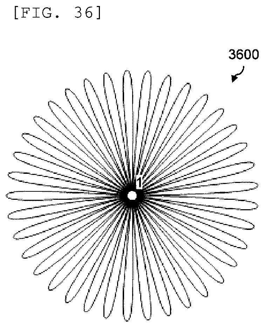

FIG. 36 is a diagram illustrating Example 1 of the third network graph according to Embodiment 4. The third network graph 3600 is a network graph based on closeness centralities of the graph features.

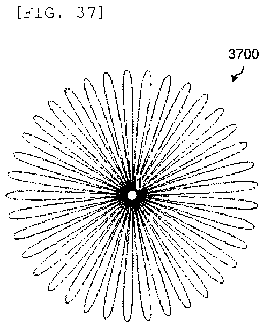

FIG. 37 is a diagram illustrating Example 2 of the third network graph according to Embodiment 4. The third network graph 3700 is a network graph based on betweenness centralities of the graph features. In the third network graphs 3600 and 3700, since all the nodes overlap one center, nodes having the same closeness centrality and betweenness centrality are gathered at the center.

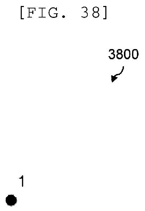

FIG. 38 is a diagram of Example 3 of a third network graph according to Embodiment 4. A third network graph 3800 is a network graph based on edge betweenness centralities of the graph features. In the third network graph 3800, since all the edge weights are 0, the edges do not exist and are not drawn.

Embodiment 4 illustrates, for example, the second network graph 3500 and the third network graphs 3600, 3700, and 3800 that start from the first network graph 1300, the second network graph 1400, and the third network graphs 1500, 1600, 1700, and 1800 illustrated in Embodiment 1, and finally aim through the consensus and relation building illustrated in Embodiment 2 or Embodiment 3.

In FIG. 2, the difference degree between opinions d becomes 0 in step S204 and the process ends. In other words, in consensus building, the second network graph and the third network graph are degenerated, and the nodes of the participants are overlapped.

### [Embodiment 5]

Next, Embodiment 5 will be described. Embodiment 5 illustrates a generation example of a network graph related to a spokescouncil in consideration of human relations. In Embodiment 5, since differences from Embodiment 1 will be mainly described, the same parts as those in Embodiment 1 are denoted by the same signs, and the description thereof will be omitted.

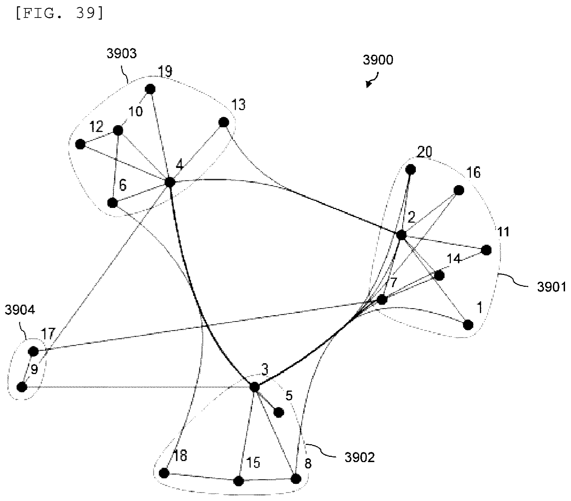

FIG. 39 is a diagram illustrating Example 1 of a third network graph according to Embodiment 5. A third network graph 3900 is a network graph based on the modularity (clustering) of the graph features. The third network graph 3900 is generated by the consensus building support device 110 calculating modularity for the first network graph 1300 in which the human relation information 1000 in FIG. 10 is set to an edge and the all edge weights are set to 1 without using the difference degree between opinions and detecting a community.

It can be seen that the third network graph 3900 includes four communities 3901 to 3904 having the node 2, node 3, node 4, and node 9 as hubs.

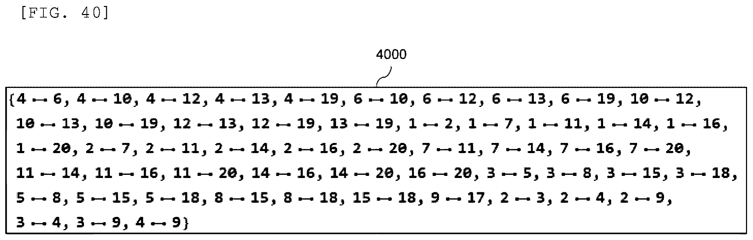

FIG. 40 is a diagram illustrating an example of human relation information according to Embodiment 5. Human relation information 4000 indicates a human relation when a spokescouncil is formed based on the communities 3901 to 3904 which are clusters in the third network graph 3900. The human relation information 4000 indicates a mutual relation between all participants in the communities 3901 to 3904 detected in the third network graph 3900 and a mutual relation between all hubs serving as spokes.

In a third network graph 4100 based on the human relation information 4000, the mean distance is 2.189, the graph density is 0.279, the link efficiency is 0.959, the clustering coefficient is 0.812, and the graph assortativity is 0.188 (see Table 4600 in FIG. 46).

Although the mean distance is larger than that of the first network graph 1300, the graph density and the link efficiency are increased, and in particular, the clustering coefficient and the graph assortativity are significantly increased. This is because a fully connected network is formed within the community and between the spokes, and the uniformity of the nodes of the participants is increased.

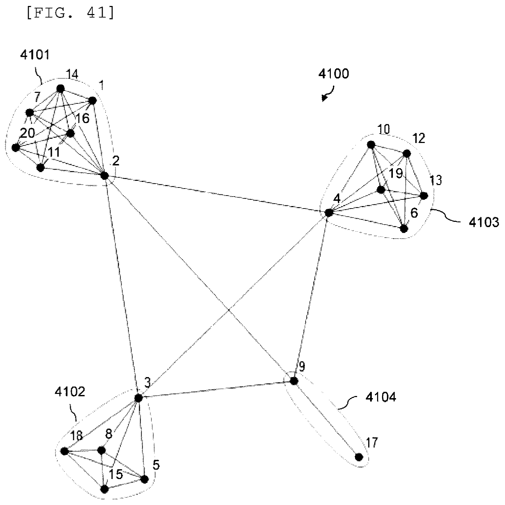

FIG. 41 is a diagram illustrating Example 2 of a third network graph according to Embodiment 5. The third network graph 4100 is a network graph based on the modularity (clustering) of the graph features. In the third network graph 4100, nodes in four communities 4101 to 4104 constitute a fully connected network, and the node 2, the node 3, the node 4, and the node 9 constitute a fully connected network as spokes.

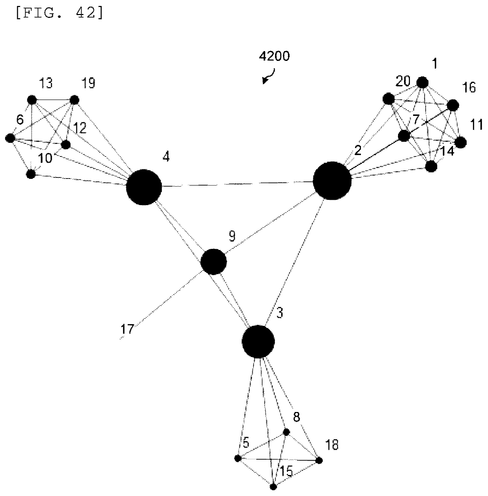

FIG. 42 is a diagram illustrating Example 3 of a third network graph according to Embodiment 5. A third network graph 4200 is a network graph based on closeness centralities of the graph features. In the third network graph 4100, it can be seen that the closeness centrality between the node 2, node 3, node 4, and node 9, which are spokes, is large.

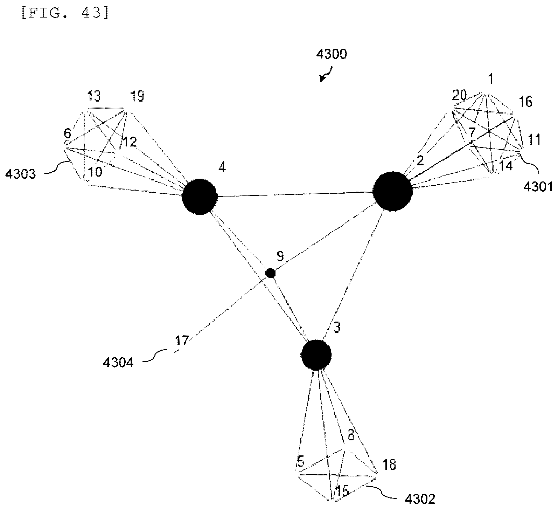

FIG. 43 is a diagram illustrating Example 4 of a third network graph according to Embodiment 5. A third network graph 4300 is a network graph based on betweenness centralities of the graph features. In the third network graph 4300, it can be seen that the greater the number of spokes with participants in the communities 4301 to 4304, the greater the betweenness centrality.

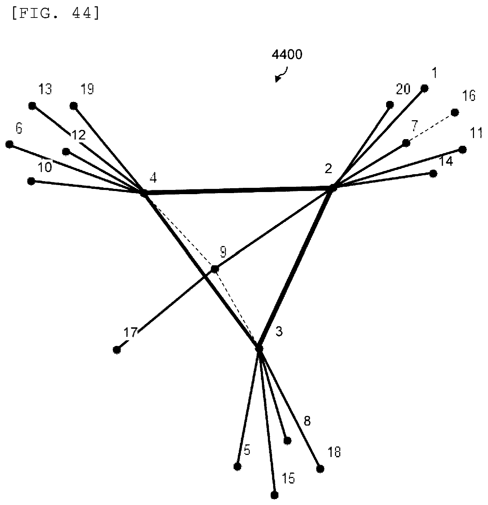

FIG. 44 is a diagram illustrating Example 5 of a third network graph according to Embodiment 5. A third network graph 4400 is a network graph based on edge betweenness centralities of the graph features. In the third network graph 4400, it can be seen that the edge betweenness centrality between the node 2 and the node 3, which are spokes having a large number of participants in the community, and the edge betweenness centrality between the node 2 and the node 4 are particularly large, and the edge betweenness centrality between the node 3 and the node 4 is next large.

According to Embodiment 5, first, the spokescouncil is configured, and then the consensus building process as described in Embodiment 1 is executed. This is suitable for a case where priority is to be given to a human relation community. In FIG. 2, the consensus building support device 110 acquires human relation information in step S201, proceeds to step S205 to generate the first network graph, detects a community in step S206, proceeds to step S209 to output promotion information for forming the spokescouncil based on the community, returns to step S201 again to confirm human relation information of the spokescouncil, and executes a consensus building process therefrom.

First, by forming the spokescouncil in consideration of the human relation, it is easier to build the human relation by outputting the promotion information than by mechanically forming the spokescouncil without considering the human relation, and it is possible to smoothly proceed with consensus building.

### [Embodiment 6]

Embodiment 6 will be described. Embodiment 6 illustrates an example in which a network graph related to a spokescouncil described in Embodiment 5 is generated in a stepwise manner in the consensus building support system 100. In Embodiment 6, since differences of Embodiment 6 from Embodiment 5 will be mainly described, the same parts as those in Embodiment 5 are denoted by the same signs, and the description thereof will be omitted.

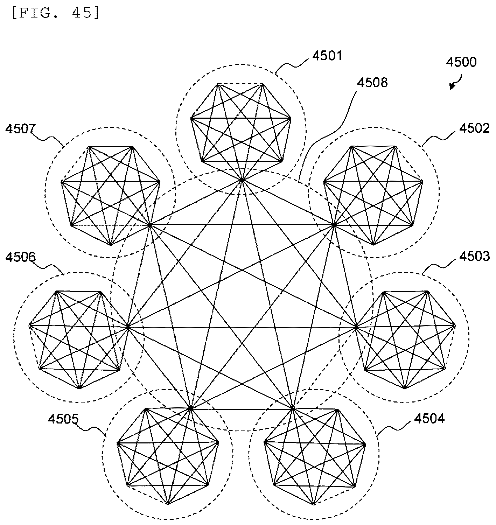

FIG. 45 is a diagram illustrating an example of a network graph related to a spokescouncil according to Embodiment 6. The network graph 4500 related to the spokescouncil is generated by hierarchically operating the consensus building support system 100. The network graph 4500 related to the spokescouncil is formed as a fully connected network by the inside of the communities 4501 to 4507 and a spoke group 4508 representing the communities.

By operating the consensus building support system 100 in a hierarchical manner using the inside of the communities 4501 to 4507 and the spoke group 4508, it is possible to perform uniform and fair consensus building.

In Embodiment 6, an example in which the consensus building support system 100 includes the communities 4501 to 4507 and the spoke group 4508 has been described, but the communities 4501 to 4507 are formed around the spoke group 4508, and each of the communities 4501 to 4507 may be further formed as a spoke group around each community of the communities 4501 to 4507. In this way, by further connecting the communities to the outside of the spoke group, it is possible to form a three-layer spokescouncil, and similarly, in the case of a large number of people, it is possible to form a multi-layer spokescouncil.

However, in the case of multiple layers, it is necessary to take into consideration, for example, to increase the number of times of consents in the layers or between the layers, or to disclose the states of the layers so that the advantages of the equality-oriented spokescouncil are lost and the fairness and efficiency are not impaired. In a social network service, a Metaverse, or the like, a public and efficient spokescouncil can be formed by utilizing a call function, a chat function, an avatar function, or the like of a communication tool.

As an example of an application to which the consensus building support system 100 is applied, it is expected to support consensus building between residents or business operators of a local government and the local government when the local government examines measures. In a case where a financial institution such as a bank considers a loan offer using an environment, a social, or a governance as one determination index, the consensus building support device 110 is expected to support consensus building between a loan recipient or a subject of the business and a financial institution in some cases.

The invention is not limited to the embodiments described above and includes various modifications and equivalent configurations within the scope of the appended claims. For example, the above embodiments are described in detail for easy understanding of the invention, and the invention is not necessarily limited to those including all the configurations described above. A part of a configuration of one embodiment may be replaced with a configuration of another embodiment. A configuration of one embodiment may also be added to a configuration of another embodiment. Another configuration may be added to a part of a configuration of each embodiment, and a part of the configuration of each embodiment may be deleted or replaced with another configuration.

A part or all of the above configurations, functions, processing units, processing methods, and the like may be implemented by hardware by, for example, designing with an integrated circuit, or may be implemented by software by, for example, a processor interpreting and executing a program for implementing each function.

Information on such as a program, a table, and a file for implementing each function can be stored in a storage device such as a memory, a hard disk, or a solid state drive (SSD), or in a recording medium such as an integrated circuit (IC) card, an SD card, or a digital versatile disc (DVD).

Control lines and information lines considered to be necessary for descriptions are illustrated, and not all control lines and information lines necessary for implementation are illustrated. Actually, almost all components may be considered to be connected to one another.

## Claims

1. A consensus building support device comprising:
a processor configured to execute a program; and
a storage device configured to store the program, wherein
the processor is configured to execute
an acquisition process of acquiring human relation information indicating human relations between a plurality of participants and difference degree information indicating a difference degree between opinions of the plurality of participants, and
a first generation process of generating, based on the human relation information and the difference degree information which are acquired in the acquisition process, a network graph including nodes indicating the participants, an edge indicating that there is a human relation between two participants among the plurality of participants, and an edge weight indicating the difference degree.

2. The consensus building support device according to claim 1, wherein
in the acquisition process, the processor acquires opinion information indicating an opinion of each of the participants, and calculates a difference degree between opinions of the two participants based on the opinion information.

3. The consensus building support device according to claim 2, wherein
in the acquisition process, the processor calculates a difference degree between opinions of the two participants based on matching in the opinions of the two participants.

4. The consensus building support device according to claim 3, wherein
the opinions are data indicating a preference relation between a plurality of options, and
in the acquisition process, the processor calculates a number of times until an opinion of one participant of the two participants reaches an opinion of the other participant by exchanging the options as the difference degree between opinions of the two participants.

5. The consensus building support device according to claim 1, wherein
the processor is configured to execute a determination process of determining whether there is a difference in the opinions for all the plurality of participants based on the difference degree information, and
in the first generation process, the processor generates the network graph when there is a difference in the opinions for all the plurality of participants.

6. The consensus building support device according to claim 1, wherein
the processor is configured to execute
a calculation process of calculating a graph feature of the network graph, and
a second generation process of generating a network graph related to the graph feature based on the network graph and the graph feature calculated by the calculation process.

7. The consensus building support device according to claim 1, wherein
the processor is configured to execute an output process of outputting promotion information for promoting consensus on the opinions or human relation building.

8. The consensus building support device according to claim 7, wherein
the processor executes a calculation process of calculating a graph feature of the network graph, and
in the output process, the processor outputs the promotion information based on the graph feature calculated by the calculation process.

9. The consensus building support device according to claim 8, wherein
in the output process, the processor outputs promotion information for promoting consensus on the opinions when a mean distance between nodes serving as hubs in a node group in the network graph is smaller than a mean distance between nodes in the network graph.

10. The consensus building support device according to claim 8, wherein
in the output process, the processor outputs promotion information for promoting the human relation building when a mean distance between nodes serving as hubs in a node group in the network graph is not smaller than a mean distance between nodes in the network graph.

11. The consensus building support device according to claim 5, wherein
the processor is configured to
execute an output process of outputting promotion information for promoting consensus on the opinions or human relation building, and
re-execute the acquisition process, the determination process, the first generation process, and the output process until it is determined that there is no difference in the opinions for all the plurality of participants in the determination process.

12. The consensus building support device according to claim 11, wherein
when promotion information for promoting consensus on the opinions is output by the output process, the processor reacquires the difference degree information in the acquisition process.

13. The consensus building support device according to claim 11, wherein
when promotion information for promoting the human relation building is output by the output process, the processor reacquires the human relation information and the difference degree information in the acquisition process.

14. A consensus building support method executed by a consensus building support device including a processor configured to execute a program and a storage device configured to store the program, the consensus building support method comprising:
by the processor,
an acquisition process of acquiring human relation information indicating human relations between a plurality of participants and difference degree information indicating a difference degree between opinions of the plurality of participants; and
a first generation process of generating, based on the human relation information and the difference degree information which are acquired in the acquisition process, a network graph including nodes indicating the participants, an edge indicating that there is a human relation between two participants among the plurality of participants, and an edge weight indicating the difference degree.

15. A consensus building support program causing a processor to execute:
an acquisition process of acquiring human relation information indicating human relations between a plurality of participants and difference degree information indicating a difference degree between opinions of the plurality of participants, and
a first generation process of generating, based on the human relation information and the difference degree information which are acquired in the acquisition process, a network graph including nodes indicating the participants, an edge indicating that there is a human relation between two participants among the plurality of participants, and an edge weight indicating the difference degree.
